(19) Europäisches Patentamt
European Patent Office
Office européen des brevets

(11) EP 0 501 002 B1

(12) EUROPEAN PATENT SPECIFICATION

(45) Date of publication and mention
of the grant of the patent:
**17.04.1996   Bulletin 1996/16**

(51) Int Cl.6: **G01C 19/72**, G01P 3/36,
G01P 9/00

(21) Application number: 91113045.8

(22) Date of filing: 02.08.1991

(54) **Optic rotation sensing apparatus and related method**

Optische Einrichtung zum Messen einer Drehung und zugehöriges Verfahren

Appareil optique pour mesurer une rotation et procédé en relation avec cet appareil

(84) Designated Contracting States:
**DE FR GB**

(30) Priority: **01.03.1991 JP 35886/91**
**22.05.1991 JP 117275/91**
**26.06.1991 JP 154261/91**
**26.06.1991 JP 154420/91**

(43) Date of publication of application:
**02.09.1992   Bulletin 1992/36**

(73) Proprietor: **MATSUSHITA ELECTRIC**
**INDUSTRIAL CO., LTD.**
**Kadoma-shi, Osaka-fu, 571 (JP)**

(72) Inventors:
• **Negishi, Hidehiko**
**Asao-ku, Kawasaki (JP)**
• **Takeuchi, Yoshinori**
**Tama-shi, Tokyo (JP)**
• **Takei, Yuko**
**Oota-ku, Tokyo (JP)**
• **Honjoya, Yoshihiko**
**Asao-ku, Kawasaki (JP)**

(74) Representative:
**Pellmann, Hans-Bernd, Dipl.-Ing. et al**
**Patentanwaltsbüro**
**Tiedtke-Bühling-Kinne & Partner**
**Bavariaring 4**
**D-80336 München (DE)**

(56) References cited:
EP-A- 0 294 915          EP-A- 0 409 375
CH-A- 589 296           DE-A- 3 401 640
DE-A- 4 000 800         GB-A- 2 089 976
US-A- 4 712 306

# Description

## OPTIC ROTATION SENSING APPARATUS AND RELATED METHOD

## BACKGROUND OF THE INVENTION

This invention relates to an optic rotation sensing apparatus such as a fiber-optic gyroscope. This invention also relates to a method related to an optic rotation detecting apparatus.

Various fiber-optic gyroscopes have been developed. For example, US-A-4,013,365 discloses a basic fiber-optic gyroscope. In addition, US-A-4,998,822 discloses an advanced fiber-optic gyroscope. Signal processing used in fiber-optic gyroscopes is of the phase-difference bias type, the two-input type, the phase-modulation type, the frequency-modulation type, and others.

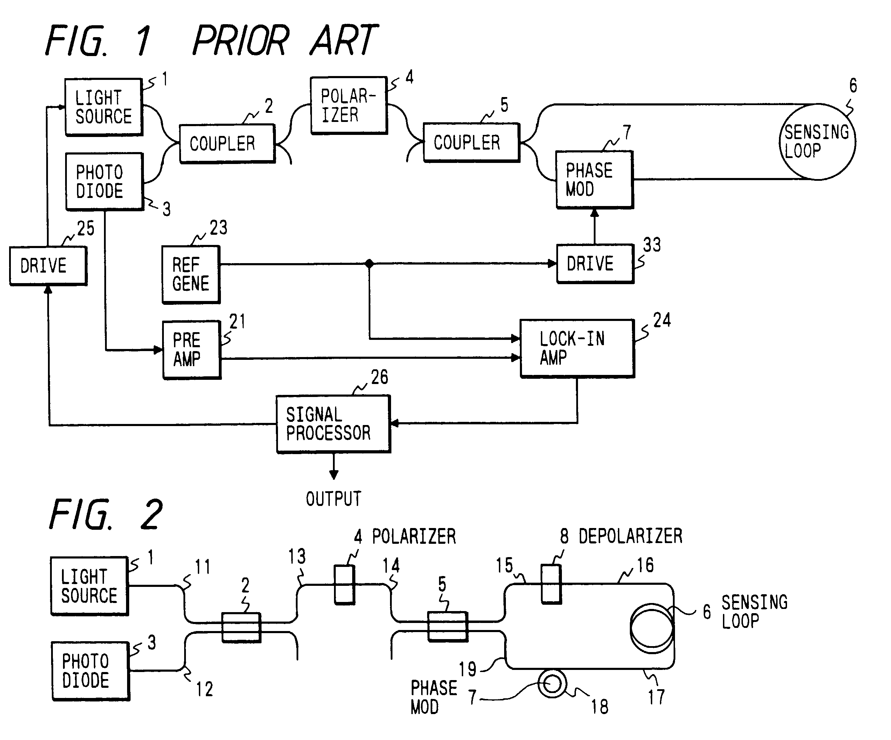

With reference to Fig. 1, a prior art fiber-optic gyroscope includes a light source 1 such as a semiconductor laser. Light emitted from the light source 1 is transmitted via a first fiber-optic coupler 2 to a polarizer 4. After the light passes through the polarizer 4, the light is transmitted via a fiber-optic mode filter to a second fiber-optic coupler 5 forming a beam splitter.

The light is separated by the beam splitter 5 into two beams which couple with two ends of an optical fiber 6 respectively. The optical fiber 6 forms a sensing loop. A part of the optical fiber 6 which extends between one end and the sensing loop is associated with to a phase modulator 7 including a piezoelectric element. One of the two light beams propagates through the sensing loop 6 in the clockwise (CW) direction, and the other light beam propagates through the sensing loop 6 in the counterclockwise (CCW) direction. Then, the two light beams are combined by the beam splitter 5 into a single return light beam. The return light beam is transmitted via the polarizer 4 and the first fiber-optic coupler 2 to a photodetector 3 such as a photodiode, being converted by the photodetector 3 into a corresponding electric signal.

A reference signal generator 23 outputs a reference signal of a predetermined frequency fm to a drive circuit 33. The drive circuit 33 generates a phase modulating signal in correspondence with the reference signal, and feeds the phase modulating signal to the phase modulator 7. The phases of the light beams propagating through the optical fiber are modulated by the phase modulator 7 in accordance with the phase modulating signal. The output signal from the photodetector 3 is fed via a preamplifier 21 to a lock-in amplifier 24. The lock-in amplifier 24 receives the reference signal from the reference signal generator 23. The lock-in amplifier 24 subjects the photodetector output signal to a synchronous detection process by using the reference signal. The output signal from the lock-in amplifier 24 is converted by a signal processor 26 into a signal directly representing the angular velocity of the fiber-optic gyroscope. In addition, the signal processor 26 generates a feedback signal on the basis of the output signal from the lock-in amplifier 24. The feedback signal is fed to a drive circuit 25. The drive circuit 25 drives the light source 1 in response to the feedback signal.

According to the Sagnac effect, the light wave traveling in the direction of a rotation of the sensing loop has a longer transit time through the sensing loop than the light wave traveling opposite to the direction of the rotation. This difference in transit time is seen as a shift in the relative phases of the two light waves. In this way, a rotation of the fiber-optic gyroscope causes a difference in phase between the two light waves, that is, the CW light and the CCW light. The CW light and the CCW light are combined while interfering with each other. The resulting interference light causes a corresponding component of the output signal from the photodetector 3. The phase difference between the CW light and the CCW light is detected by analyzing the component of the output signal from the photodetector 3 which corresponds to the interference light.

It is thought that one noise factor of the fiber-optic gyroscope results from the phase detector 7. To remove this noise factor, the frequency fm of the reference signal or the frequency of the phase modulating signal fed to the phase modulator 7 is generally required to satisfy the following equation.

$$fm = c/(2nL)$$

where "c" denotes the speed of light in a vacuum, and "n" denotes the effective refractive index of the optical fiber 6 and "L" denotes the length of the sensing loop.

As understood from the previously-mentioned equation, a decrease in the length of the sensing loop requires an increase in the frequency fm of the phase modulating signal. In general, increasing the frequency fm of the phase modulating signal is considerably limited. Thus, in the prior art fiber-optic gyroscope of Fig. 1, the length L of the sensing loop tends to be long.

Further, in the prior art fiber-optic gyroscope of Fig. 1, to maintain the direction of the polarization of the incident light, it is desirable that all the optical paths are defined by expensive optical fibers of the polarization-plane conservative type.

Document US-A-4 712 306 discloses an optic rotation sensing apparatus and method according to the preamble of claims 1 and 12, respectively.

A dual phase modulator is employed therein, consisting of two identical phase modulators placed at the opposite ends of the sensing loop and excited 180° out-of-phase. Thereby, environmental effects that undesirably excite both modulators are cancelled, since they excite both modulators in phase with nearly equal amplitudes and consequently do not produce any net modulation.

However, the dual phase modulation requires identical phase modulators having identical lengths of coiled optical fibers, identical winding tensions and an identical bonding structure.

Alternatively, the US-A-4 712 306 suggests to use a single-phase modulator which is connected to a driver by a switch such that the driving signal may alternately be supplied directly or via a 180° phase delay circuit in order to suppress environmental effects.

Nevertheless, the single-phase modulator suffers from the drawback that the sensing loop is unsymmetrically heated which results in a bias drift. Therefore, the use of a matched peir of symmetrically placed phase modulators is suggested.

Thus, according to this prior art, two phase modulators are required to achieve an effective reduction of environmental noise components. This, however, leads to increased costs and complexity of the optical rotation sensing apparatus.

Additionally, document GB-A-2 089 976 discloses a ring interferometer which, however, does not comprise any phase modulator at all, and wherein no considerations with regard to a reduction of bias noise components due to environmental effects are made.

It is therefore an object of the present invention to provide an improved optic rotation sensing apparatus and method by means of which noise components are minimized without requiring an additional phase modulator.

This object is achieved by an optic rotation sensing apparatus and method as claimed in claims 1 and 12, respectively.

Accordingly, an effective noise reduction can be achieved simply by controlling the output signal of the photodetector at a certain noise minimizing phase, which is determined by the zero point phase values of the noise-phase responsive characteristic of the output signal of the fiber-optic gyroscope.

## BRIEF DESCRIPTION OF THE DRAWINGS

Fig. 1 is a diagram of a prior art fiber-optic gyroscope.

Fig. 2 is a diagram of a fiber-optic gyroscope.

Fig. 3 is a time-domain diagram showing drift characteristics of a zero-point output which is obtained in the absence of a depolarizer.

Fig. 4 is a time-domain diagram showing drift characteristics of a zero-point output which is obtained in the presence of a depolarizer.

Figs. 5-11 are diagrams showing the relation between a phase shift amount and a zero-point output level.

Fig. 12 is a diagram of a fiber-optic gyroscope according to a first embodiment of this invention.

Fig. 13 is a diagram showing time-domain variations of a zero-point output level in the fiber-optic gyroscope of Fig. 12.

Fig. 14 is a diagram of a fiber-optic gyroscope according to a second embodiment of this invention.

Fig. 15 is a diagram of a fiber-optic gyroscope according to a third embodiment of this invention.

Fig. 16 is a diagram of a fiber-optic gyroscope according to a fourth embodiment of this invention.

Fig. 17 is a diagram of a fiber-optic gyroscope according to a fifth embodiment of this invention.

Fig. 18 is a diagram of a fiber-optic gyroscope according to a sixth embodiment of this invention.

Fig. 19 is a diagram of a fiber-optic gyroscope according to an seventh embodiment of this invention.

Fig. 20 is a diagram of a fiber-optic gyroscope according to a eighth embodiment of this invention.

Fig. 21 is a diagram of a fiber-optic gyroscope according to a ninth embodiment of this invention.

Fig. 22 is a diagram of a fiber-optic gyroscope according to an tenth embodiment of this invention.

Fig. 23 is a sectional view of a part of the sensing loop arrangement of Fig. 22.

Fig. 24 is a block diagram of the control circuit of Fig. 17.

With reference to Fig. 2, a fiber-optic gyroscope includes a light source 1 using a super luminescence diode (an SLD). Light emitted from the light source 1 is guided to a first optical coupler 2 along an optical path 11 defined by an optical fiber. The first coupler 2 serves as a beam splitter. The light is separated by the first coupler 2 into two light beams having equal intensities. One of the light beams travels from the first coupler 2 to a laminated-type polarizer 4 via an optical path 13 defined by an optical fiber. The polarizer 4 confines the direction of the polarization of the light, and outputs light polarized in one direction. After passing through the polarizer 4, the light travels to a second optical coupler 5 via an optical path 14 defined by an optical fiber. The second coupler 5 serves as a beam splitter.

The light is separated by the beam splitter 5 into two beams, which travel to a depolarizer 8 and a phase modulator 7 via optical paths 15 and 19 defined by optical fibers respectively. The depolarizer 8 serves to convert the polarized light into natural light. After passing through the depolarizer 8, the light beam enters a sensing loop 6 via an optical path 16 and then propagates through the sensing loop 6 in the clockwise (CW) direction. The light traveling through the sensing loop 6 in the CW direction will be referred to as the CW light hereinafter. The optical path 16 and the sensing loop 6 are defined by optical fibers. The CW light exits from the sensing loop 6, and then travels to the phase modulator 7 via an optical path 17 defined by an optical fiber. The CW light propagates through an optical path 18 defined by an optical fiber wound on a piezoelectric element of the phase modulator 7. After exiting from the phase modulator 7, the CW light travels to the second coupler 5 via the optical path 19. The other light beam passes through the optical path 18 within the phase modulator 7, and then travels to the sensing loop 6 via the optical path 17. The light beam enters the sensing loop 6 and propagates through the sensing loop 6 in the counterclockwise (CCW) direction. The light traveling through the sensing loop 6 in the CCW direction will be referred to as the CCW light. The CCW light exits from the sensing loop 6, and then travels to the depolarizer 8 via the optical path 16. The depolarizer 8 converts the light into natural light. After passing through the depolarizer 8, the CCW light travels to the second coupler 5 via the optical path 15.

The CW light and the CCW light are combined by the second coupler 5 into a single return light beam while interfering with each other. Alter exiting from the second coupler 2, the return light propagates to the first coupler 2 via the optical path 14, the polarizer 4, and the optical path 13. The return light is separated by the first coupler 2 into two light beams, one of which travels from the first coupler 2 to a photodiode 3 via an optical path 12 defined by an optical fiber. The light beam is converted by the photodiode 3 into a corresponding electric signal.

The polarizer 4 is provided for the reason as follows. Generally, two modes of light waves which have orthogonal polarization directions can propagate in an optical fiber. The nonaxisymmetric characteristics of the optical fiber causes an energy coupling between the two orthogonal modes. If the energy coupling conditions change due to a temperature variation or other factors, an error is induced in the output signal from the fiber-optic gyroscope. Specifically, the error causes an drift in the output signal from the fiber-optic gyroscope. A good way of reducing such a drift in the output signal from the fiber-optic gyroscope is to equalize the transfer functions for the CW light and the CCW light. This is realized by the provision of the polarizer 4 in the optical path between the first coupler 2 and the second coupler 5. The polarizer 4 introduces a single polarization component of the forward light into the sensing loop 6, and the introduced light component is separated into the CW light and the CCW light. After traveling through the sensing loop 6, the CW light and the CCW light are combined into the return light. The polarizer 4 passes only a single polarization component of the return light which corresponds to the selected polarization component of the forward light.

The depolarizer 8 is of the Lyot fiber type, including two polarization-plane conservative optical fibers having different lengths. The length of the longer optical fiber is twice the length of the shorter optical fiber. The two optical fibers are connected in such a manner that the main axes of the optical fibers incline to each other at an angle of 45 degrees. The depolarizer 8 produces a difference in optical path length between the orthogonal polarization modes, decreasing an interference between the orthogonal polarization modes. In other words, the depolarizer 8 depolarizes the CW light beam and the CCW light beam into natural light beams, removing unnecessary interference noise component caused by a variation in the polarization conditions in the sensing loop 6. As a result, it is possible to further reduce the drift in the output signal from the fiber-optic gyroscope.

The phase modulator 7 provides an optical phase difference between the CW light and the CCW light. The phase modulator 7 includes a cylindrical piezoelectric element, and the optical fiber wound around the piezoelectric element and defining the optical path 18. While passing through the optical path 18 in the phase modulator 7, the CW light and the CCW light are subjected to phase modulation. This phase modulation is to increase the sensitivity in the detection of a Sagnac phase difference between the CW light and the CCW light which is caused by a rotation of the fiber-optic gyroscope.

The optical fibers defining the optical paths 11, 12, 13, 14, 15, 16, 17, and 19 are of the single-mode type. The optical fiber defining the optical path 18 is preferably of the polarization-plane conservative type for the following reason. As the phase modulator 7 receives a phase modulation signal, the piezoelectric element in the phase modulator 7 expands and contracts. The expansion and contraction of the piezoelectric element causes a stress in the optical fiber defining the optical path 18. The stress in the optical fiber unsettles the polarization conditions and the intensity of the light beams. In the case where the depolarizer 8 adequately depolarizes the CW light and the CCW light, the optical fiber defining the optical path 18 may be of the single-mode type.

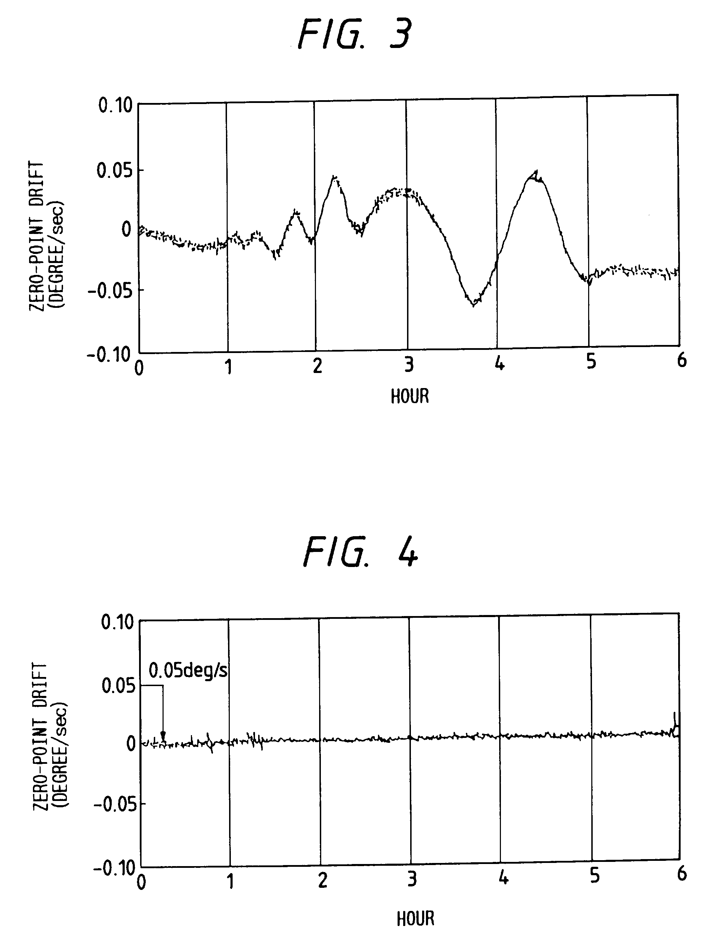

Experiments were performed on the effect of the depolarizer 8. During the experiments, zero-point drift characteristics of the output signal from the fiber-optic gyroscope were measured in the presence of the depolarizer 8 and in the absence of the depolarizer 8. Fig. 3 shows the experimental results of the time-domain variations in the zero point of the output signal from the fiber-optic gyroscope which were obtained in the absence of the depolarizer 8. As shown in Fig. 3, the drift quantity of the zero point of the output signal from the fiber-optic gyroscope was equal to about 0.1 degree/second in the absence of the depolarizer 8. Fig. 4 shows the experimental results of the time-domain variations in the zero point of the output signal from the fiber-optic gyroscope which were obtained in the presence of the depolarizer 8. As shown in Fig. 4, the drift quantity of the zero point of the output signal from the fiber-optic gyroscope was equal to about 0.005 degree/second in the absence of the depolarizer 8.

The light source 1 may be composed of a semiconductor layer, a He-Ne laser, or others.

The optical fibers defining the optical paths 11, 12, 13, 14, 15, 16, 17, and 19 may be of the polarization-plane conservative type, or other types.

The optical fiber defining the sensing loop 6 is preferably of the single-mode type. The optical fiber defining the sensing loop 6 may be of the polarization-plane conservative type.

The first and second optical couplers 2 and 5 are preferably of the fiber-optic type. In this case, all the optical paths in the fiber-optic gyroscope can be formed by optical fibers. The optical fibers used in the first and second couplers 2 and 5 are of the single-mode type or the polarization-plane conservative type.

The polarizer 4 may be of the fiber-optic type. The polarizer 4 may also be of the type including an optical waveguide directly clad with metal. In addition, the polarizer 4 may be of the waveguide type including an optical waveguide substrate made of an anisotropic optical crystal such as $LiNbO_3$.

The depolarizer 8 may be located between the optical paths 18 and 19. The depolarizer 8 may also be located between the optical paths 17 and 18. In addition, the depolarizer 8 may be located in the major part of the sensing loop 6. The depolarizer 8 may be of the bulk Lyot type using a birefringent crystal. A depolarizer or depolarizers may be provided in addition to the depolarizer 8. The additional depolarizer or polarizers are located in suitable positions such as a position between the optical paths 18 and 19, a position between the optical paths 17 and 18, and a position in the sensing loop 6.

The phase modulator 7 may be of the waveguide type, or other types.

First Embodiment

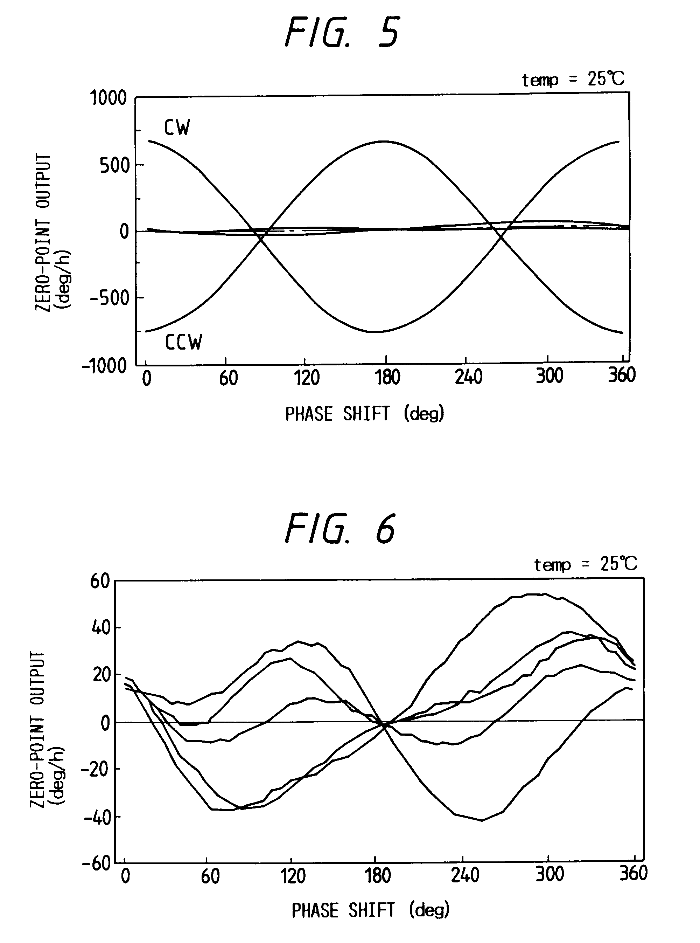

A first embodiment of this invention uses the results of experiments. During the experiments, the noise phase-responsive characteristics of the zero point of the output signal from the fiber-optic gyroscope of Fig. 2 were measured by using sync detection under conditions where the fiber-optic gyroscope remained stationary and the temperature of the fiber-optic gyroscope was 25°C. Fig. 5 shows the result of the measurement. In Fig. 5, the abscissa denotes the amount of a phase shift which was provided to a reference signal for the sync detection, and the ordinate denotes the level of the zero point of the output signal from the fiber-optic gyroscope, that is, the zero bias value of the output signal from the fiber-optic gyroscope, which is represented in unit of angular velocity (degree/hour). In Fig. 5, the amplitude in the direction of the ordinate virtually denotes a value of the zero-point drift, that is, a value of the noise component. This noise component agreed with an AM noise component, having a fixed characteristic with respect to a variation in the phase shift amount. Specifically, the variation amount of the output signal was minimized to zero for a given phase shift amount. Under conditions where the fiber-optic gyroscope was rotated in the clockwise (CW) direction at an angular velocity of 0.2 degree/second, the level of the output signal from the fiber-optic gyroscope, that is, the sensitivity of the fiber-optic gyroscope, was measured for varying phase shift amounts. The measured levels are plotted as the curve CW in Fig. 5. Under conditions where the fiber-optic gyroscope was rotated in the counterclockwise (CCW) direction at an angular velocity of 0.2 degree/second, the level of the output signal from the fiber-optic gyroscope, that is, the sensitivity of the fiber-optic gyroscope, was measured at varying phase shift amounts. The measured levels are plotted as the curve CCW in Fig. 5. As understood from the CW curve and the CCW curve of Fig. 5, the sensitivity of the fiber-optic gyroscope was maximized at phase shift amounts of 0 degree, 180 degrees, and 360 degrees. As understood from Fig. 5, the AM noise phase-responsive characteristics have nodes at phase shift amounts near the sensitivity-maximizing phase shift amounts. Accordingly, in cases where the phase shift amount is set so as to minimize the level of the AM noise, both a high sensitivity of the fiber-optic gyroscope and a good S/N ratio of the output signal from the fiber-optic gyroscope can be attained.

Fig. 6 shows the relation between the AM noise and the phase shift amount of the reference signal with enlarged scales of the level of the AM noise in the output signal from the fiber-optic gyroscope. As shown in Fig. 6, the AM noise had a node at a phase shift amount of about 180 degrees. As understood from Figs. 5 and 6, there was an interval of about 90 degrees between the phase shift amount at which the rotation-dependent signal was minimized and the phase shift amount at which the level of the AM noise was minimized. It is thought that the AM noise is caused by the modulation of the intensity of the CW light and the CCW light which occurs simultaneously with the phase modulation of the CW light and the CCW light by the phase modulator 7. As shown in Fig. 6, although the amplitude of the AM noise components varied greatly, the node of the AM noise components was substantially fixed at a point corresponding to a phase shift amount of about 180 degrees.

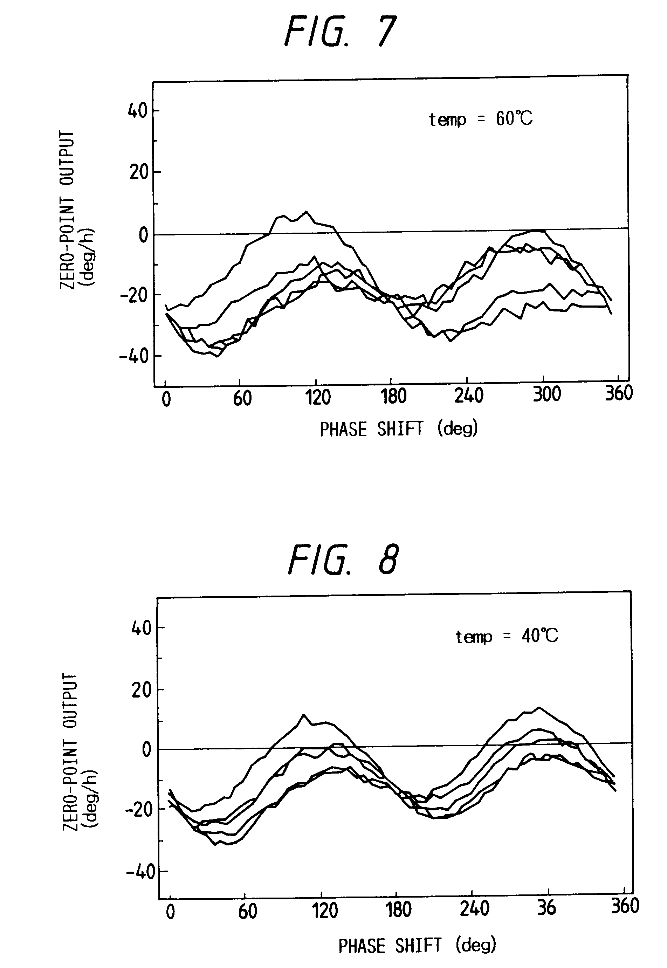

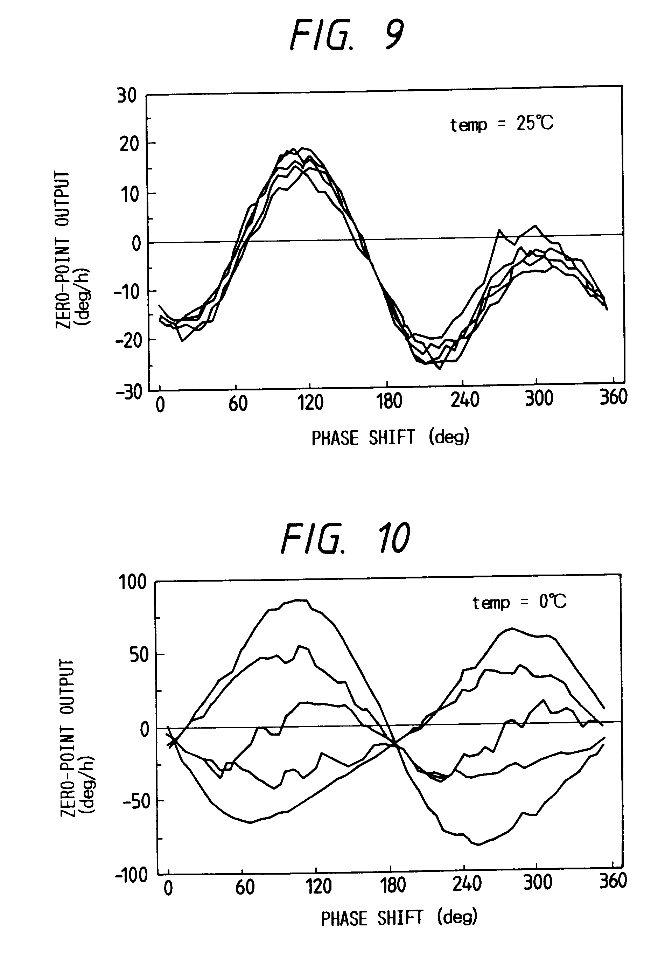

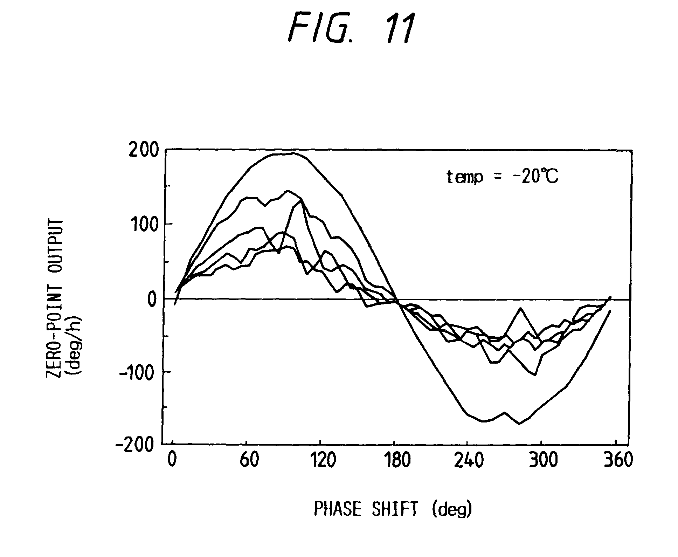

The AM noise characteristics of the output signal from the fiber-optic gyroscope in response to the phase shift amount of the reference signal were measured also at temperatures of 60°C, 40°C, 25°C, 0°C, and -20°C. Figs. 7, 8, 9, 10, and 11 show the results of the measurement at temperatures of 60°C, 40°C, 25°C, 0°C, and -20°C respectively. As understood from Figs. 6-11, the node of the AM noise components was substantially fixed, independent of the temperature of the fiber-optic gyroscope, at a point corresponding to a phase shift amount of about 180 degrees.

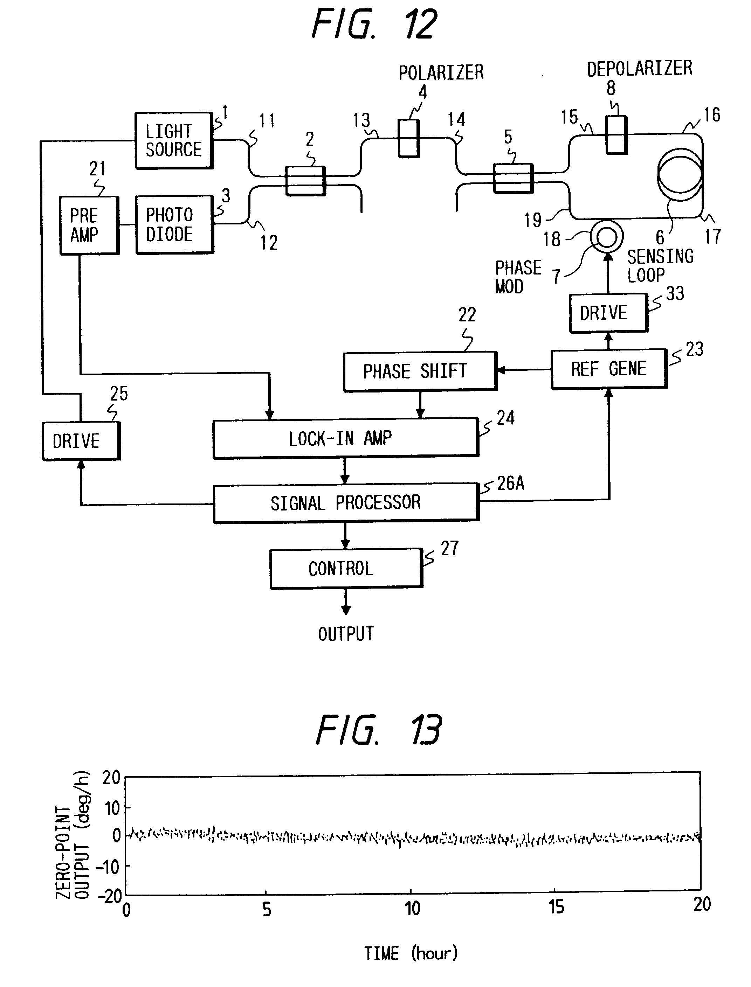

Fig. 12 shows the first embodiment of this invention which is similar to the embodiment of Fig. 2 except for an additional arrangement explained later.

As shown in Fig. 12, the first embodiment includes a reference signal generator 23 which outputs a reference signal of a predetermined frequency to a drive circuit 33. The drive circuit 33 generates a phase modulating signal in correspondence with the reference signal, and feeds the phase modulating signal to the phase modulator 7. The phases of the CW and CCW light beams are modulated by the phase modulator 7 in accordance with the phase modulating signal. The reference signal generator 23 also outputs the reference signal to a variable phase shifter 22. The phase shifter 22 shifts the input reference signal by an adjustable amount, converting the input reference signal into a second reference signal. The output signal from the photodiode 3 is fed via a preamplifier 21 to a lock-in amplifier 24. The lock-in amplifier 24 receives the second reference signal from the phase shifter 22. The lock-in amplifier 24 subjects the photodiode output signal to a synchronous detection process by using the second reference signal. The output signal from the lock-in amplifier 24 is converted by a signal processor 26A into a signal directly representing the angular velocity of the fiber-optic gyroscope. The information of the angular velocity is transmitted from the signal processor 26A to an external device (not shown) via a signal controller 27. The signal processor 26 also generates a feedback signal on the basis of the output signal from the lock-in amplifier 24. The feedback signal is fed to a drive circuit 25. The drive circuit 25 drives the light source 1 in response to the feedback signal. The drive of the light source 1 in response to the feedback signal is designed so that the intensity of the light emitted from the light source 1 can be held essentially constant.

Furthermore, the signal processor 26A generates a feedback signal on the basis of the output signal from the lock-in amplifier 24. The feedback signal is fed to the reference signal generator 23 so that the level of the output from the reference signal generator 23, that is, the degree of the phase modulation, can be held essentially constant.

In view of the fact that the level of the AM noise components is minimized at a given amount of the phase shift of the reference signal as shown in Figs. 5 and 6, the amount of the reference-signal phase shift by the phase shifter 22 is set to an amount at which the level of the AM noise in the rotation-representing signal in the signal processor 26A can be minimized. The phase of the second reference signal fed to the lock-in amplifier 24 can be held at the noise-minimizing phase by the application of the feedback signal from the signal processor 26A to the reference signal generator 23. Thus, the output signal from the signal processor 26A can be highly accurate and can be drift-free.

Experiments were performed on the zero-point drift characteristics of the output signal from the fiber-optic gyroscope of this embodiment. During the experiments, the zero-point level of the output signal from the fiber-optic gyroscope was measured for a long time. Fig. 13 shows the results of the measurement. As shown in Fig. 13, the zero-point level of the output signal from the fiber-optic gyroscope remained substantially constant for a long time such as more than 100 hours.

The results of the measurement of the phase-responsive noise characteristics which are obtained in a temperature range from -20°C to 60°C may be previously fed to the signal processor 26 so that good zero-point drift characteristics of the rotation-representing output signal can be attained for a wide temperature range.

The phase of the reference signal may be controlled so that the sensitivity of the fiber-optic gyroscope can be maximized.

## Second Embodiment

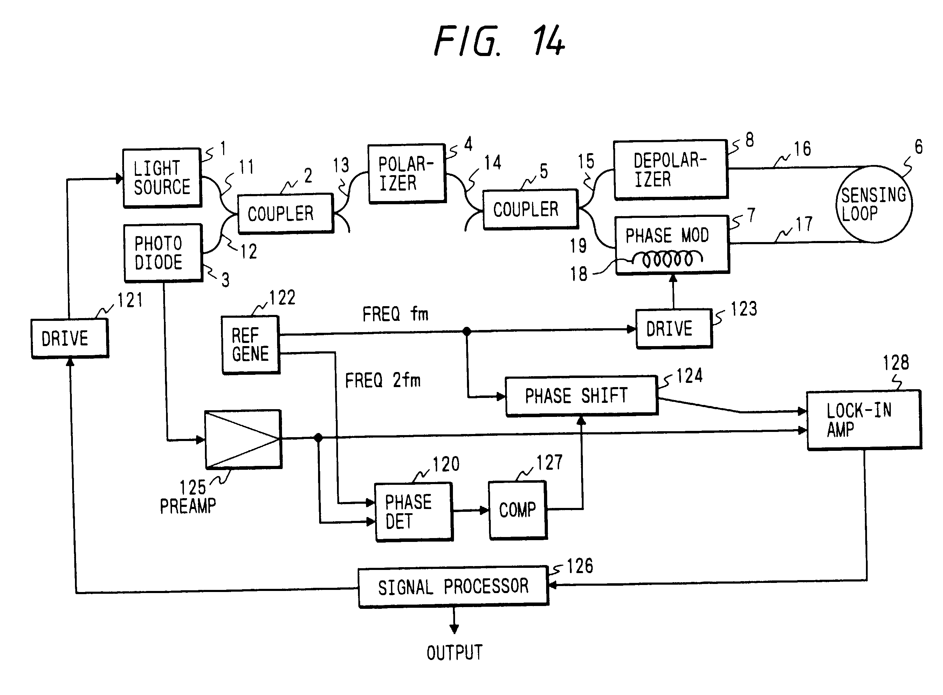

Fig. 14 shows a second embodiment of this invention which is similar to the embodiment of Fig. 12 except for design changes indicated hereinafter.

As shown in Fig. 14, the second embodiment includes a reference signal generator 122 which outputs a first reference signal of a predetermined frequency fm to a drive circuit 123. The drive circuit 123 generates a phase modulating signal in correspondence with the first reference signal, and feeds the phase modulating signal to a phase modulator 7. The phases of the CW and CCW light beams are modulated by the phase modulator 7 in accordance with the phase modulating signal. Thus, the CW and CCW light beams are phase-modulated at a frequency equal to the frequency fm of the first reference signal. The reference signal generator 122 also outputs the first reference signal to a variable phase shifter 124. The phase shifter 124 shifts the first reference signal by an adjustable amount, converting the first reference signal into a second reference signal. The output signal from the photodiode 3 is fed via a preamplifier 125 to a lock-in amplifier 128. The lock-in amplifier 128 receives the second reference signal from the phase shifter 124. The lock-in amplifier 128 subjects the photodiode output signal to a synchronous detection process by using the second reference signal. The output signal from the lock-in amplifier 128 is converted by a signal processor 126 into a signal directly representing the angular velocity of the fiber-optic gyroscope. The signal processor 126 also generates a feedback signal on the basis of the output signal from the lock-in amplifier 128. The feedback signal is fed to a drive circuit 121. The drive circuit 121 drives the light source 1 in response to the feedback signal. The drive of the light source 1 in response to the feedback signal is designed so that the intensity of the light emitted from the light source 1 can be held essentially constant.

Furthermore, the reference signal generator 122 outputs a third reference signal of a predetermined frequency 2fm to a phase detector 120. The frequency 2fm of the third reference signal is twice the frequency fm of the first reference signal. The output signal from the photodiode 3 is transmitted via the preamplifier 125 to the phase detector 120. The phase detector 120 subjects the photodiode output signal to a phase detection process by using the third reference signal, and detects the phase of the components of the photodiode output signal which have a frequency twice the frequency fm of the first reference signal. In other words, the phase detector 120 detects the phase of a second-harmonic component of the photodiode output signal. A compensation circuit 127 following the phase detector 120 generates a control signal on the basis of the output signal from the phase detector 120, and outputs the control signal to the phase shifter 124. The amount of the phase shift of the first reference signal by the phase shifter 124 is controlled in response to the control signal fed from the compensation circuit 127. The compensation circuit 127 compensates for the gain and the response time so that the amount of the phase shift by the phase shifter 124 can be equal to a predetermined fraction, for example, a half, of the phase detected by the phase detector 120.

As understood from the previous description, the phase of the second reference signal fed to the lock-in amplifier 128 is controlled by the phase shifter 124. The control of the phase of the second reference signal is designed so that the phase of the second reference signal can remain in a predetermined relation with the phase of the components of the photodiode output signal which have the given frequency fm, and that the lock-in amplifier 128 can execute the sync detection with the given phase of the second reference signal at which the level of the AM noise is minimized.

The phase detector 120 and the reference signal generator 122 may be designed so that a phase detection will be given of the components of the photodiode output signal which have a frequency equal to four times the frequency fm of the first reference signal.

The phase shifter 124 may be moved to a position between the preamplifier 125 and the lock-in amplifier 128.

Third Embodiment

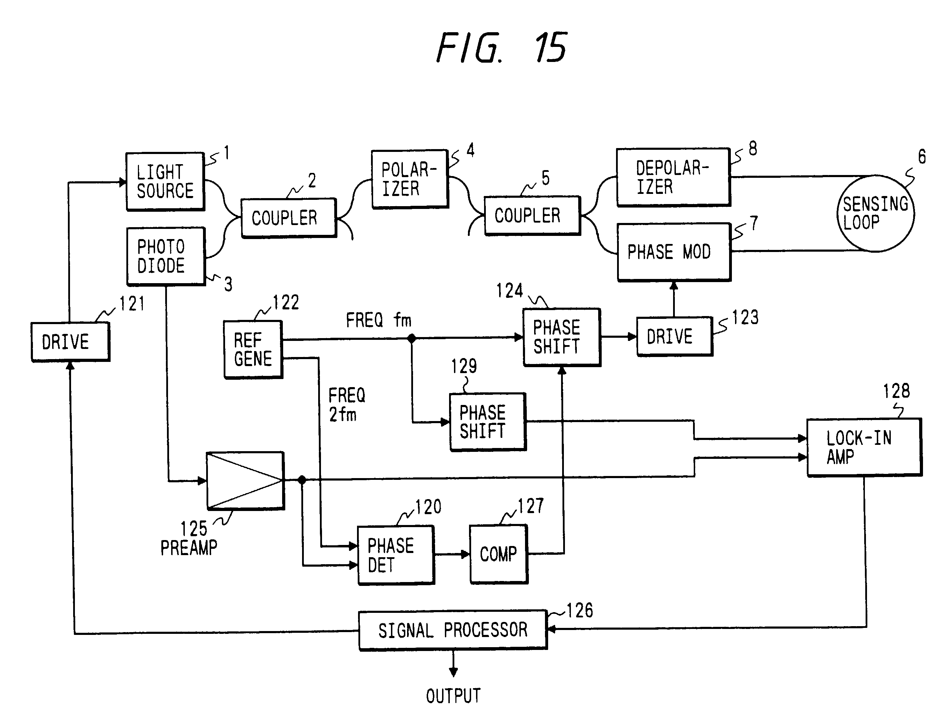

Fig. 15 shows a third embodiment of this invention which is similar to the embodiment of Fig. 14 except for design changes indicated hereinafter.

As shown in Fig. 15, the third embodiment includes a reference signal generator 122 which outputs a first reference signal of a predetermined frequency fm to a variable phase shifter 124. The phase shifter 124 shifts the first reference signal by an adjustable amount, converting the first reference signal into a second reference signal. The phase shifter 124 outputs the second reference signal to a drive circuit 123. The drive circuit 123 generates a phase modulating signal in correspondence with the second reference signal, and feeds the phase modulating signal to the phase modulator 7. The phases of the CW and CCW light beams are modulated by the phase modulator 7 in accordance with the phase modulating signal. Thus, the CW and CCW light beams are phase-modulated at a frequency equal to the frequency fm of the first reference signal. The reference signal generator 122 also outputs the first reference signal to a fixed phase shifter 129. The phase shifter 129 shifts the first reference signal by a predetermined amount, converting the first reference signal into a third reference signal. The output signal from the photodiode 3 is fed via a preamplifier 125 to a lock-in amplifier 128. The lock-in amplifier 128 receives the third reference signal from the phase shifter 129. The lock-in amplifier 128 subjects the photodiode output signal to a synchronous detection process by using the third reference signal. The output signal from the lock-in amplifier 128 is converted by a signal processor 126 into a signal directly representing the angular velocity of the fiber-optic gyroscope. The signal processor 126 also generates a feedback signal on the basis of the output signal from the lock-in amplifier 128. The feedback signal is fed to a drive circuit 121. The drive circuit 121 drives the light source 1 in response to the feedback signal. The drive of the light source 1 in response to the feedback signal is designed so that the intensity of the light emitted from the light source 1 can be held essentially constant.

Furthermore, the reference signal generator 122 outputs a fourth reference signal of a predetermined frequency 2fm to a phase detector 120. The frequency 2fm of the fourth reference signal is twice the frequency fm of the first reference signal. The output signal from the photodiode 3 is transmitted via the preamplifier 125 to the phase detector 120. The phase detector 120 subjects the photodiode output signal to a phase detection process by using the fourth reference signal, and detects the phase of the components of the photodiode output signal which have a frequency twice the frequency fm of the first reference signal. In other words, the phase detector 120 detects the phase of a second-harmonic component of the photodiode output signal. A compensation circuit 127 following the phase detector 120 generates a control signal on the basis of the output signal from the phase detector 120, and outputs the control signal to the phase shifter 124. The amount of the phase shift of the first reference signal by the phase shifter 124 is controlled in response to the control signal fed from the compensation circuit 127. The compensation circuit 127 compensates for the gain and the response time so that the amount of the phase shift by the phase shifter 124 can be equal to a predetermined fraction, for example, a half, of the phase detected by the phase detector 120.

As understood from the previous description, the phase of the second reference signal fed to the phase modulation drive circuit 123 is controlled by the phase shifter 124. Thus, the phase of the components of the photodiode output signal which have a frequency equal to the frequency fm of the first reference signal is controlled by the phase shifter 124 relative to the phase of the third reference signal fed to the lock-in amplifier 128. This phase control is designed so that the phase of the third reference signal can remain in a predetermined relation with the phase of the components of the photodiode output signal which have the given frequency fm, and that the lock-in amplifier 128 can execute the sync detection with the given phase of the third reference signal at which the level of the AM noise is minimized.

Fourth Embodiment

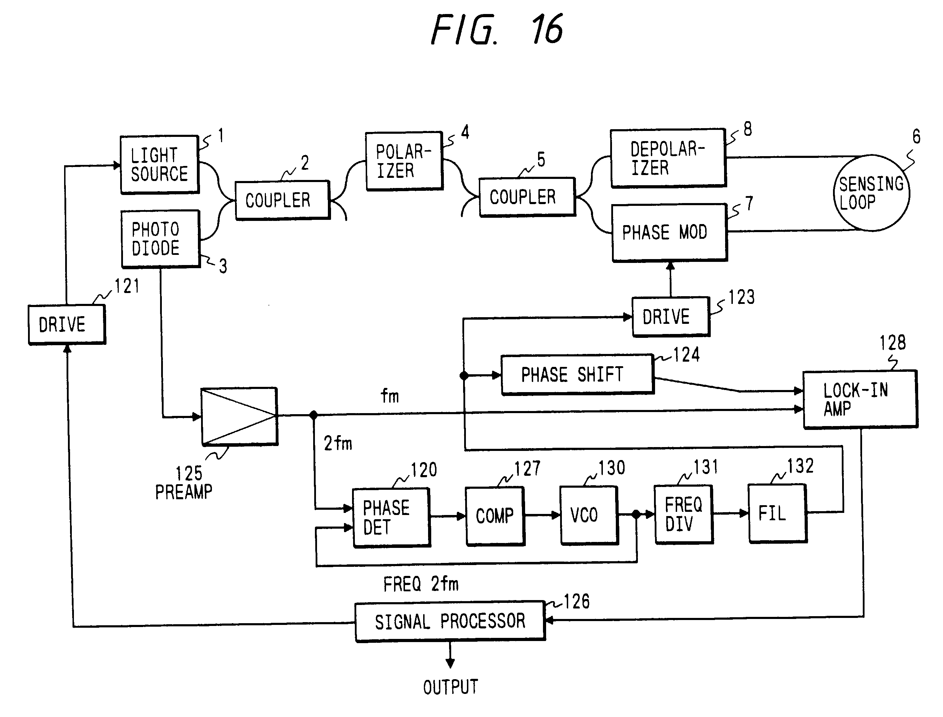

Fig. 16 shows a fourth embodiment of this invention which is similar to the embodiment of Fig. 15 except for design changes indicated hereinafter.

As shown in Fig. 15, the fourth embodiment includes a phase detector 120 which receives the output signal from a photodiode 3 via a preamplifier 125. The components of the photodiode output signal which have a frequency 2fm twice a given frequency fm are subjected to a phase detection process by the phase detector 120 in response to an output signal from a voltage-controlled oscillator (VCO) 130. The output signal from the phase detector 120 is processed by a compensation circuit 127.

The compensation circuit 127 compensates for the gain and the response time. The output signal from the compensation circuit 127 is fed to the VCO 130 as a control signal. The output signal from the VCO 130 is fed back to the phase detector 120. The loop formed by the phase detector 120, the compensation circuit 127, and the VCO 130 generates a signal which is locked in frequency and phase to the 2fm-frequency components of the photodiode output signal. This generated signal is outputted from the loop to a frequency divider 131. The frequency divider 131 halves the frequency of the received signal, converting the received signal into a reference signal of the given frequency fm. The reference signal is transmitted from the frequency divider 131 to a drive circuit 123 and a fixed phase shifter 129 via a filter 132. The filter 132 removes signal components having frequencies different from the given frequency fm.

The drive circuit 123 generates a phase modulating signal in correspondence with the reference signal, and feeds the phase modulating signal to the phase modulator 7. The phases of the CW and CCW light beams are modulated by the phase modulator 7 in accordance with the phase modulating signal. Thus, the CW and CCW light beams are phase-modulated at a frequency equal to the frequency fm of the first reference signal. The phase shifter 129 shifts the first reference signal by a predetermined amount, converting the first reference signal into a second reference signal. The output signal from the photodiode 3 is fed via the preamplifier 125 to a lock-in amplifier 128. The lock-in amplifier 128 receives the second reference signal from the phase shifter 129. The lock-in amplifier 128 subjects the photodiode output signal to a synchronous detection process by using the second reference signal. The output signal from the lock-in amplifier 128 is converted by a signal processor 126 into a signal directly representing the angular velocity of the fiber-optic gyroscope. The signal processor 126 also generates a feedback signal on the basis of the output signal from the lock-in amplifier 128. The feedback signal is fed to a drive circuit 121. The drive circuit 121 drives the light source 1 in response to the feedback signal. The drive of the light source 1 in response to the feedback signal is designed so that the intensity of the light emitted from the light source 1 can be held essentially constant.

The phase shifter 129 provides a predetermined phase difference between the second reference signal and the photodiode output signal fed to the lock-in amplifier 128. This provision of the phase difference is designed so that the phase of the second reference signal can remain in a predetermined relation with the phase of the components of the photodiode output signal which have the given frequency fm, and that the lock-in amplifier 128 can execute the sync detection with the given phase of the second reference signal at which the level of the AM noise is minimized.

Fifth Embodiment

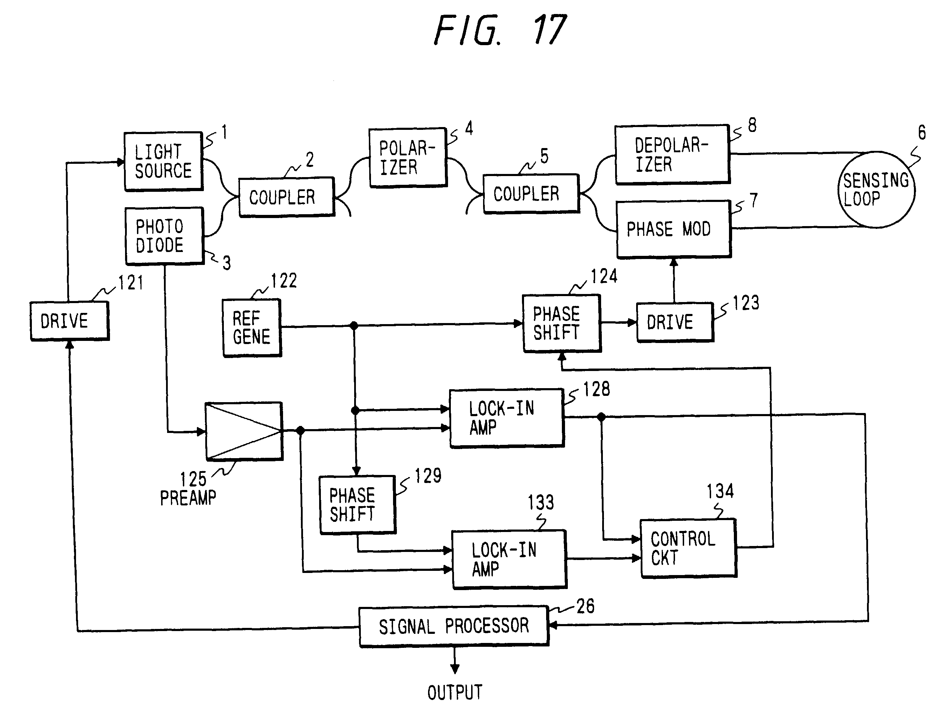

Fig. 17 shows a fifth embodiment of this invention which is similar to the embodiment of Fig. 15 except for design changes indicated hereinafter.

As shown in Fig. 17, the fifth embodiment includes a reference signal generator 122 which outputs a first reference signal of a predetermined frequency fm to a variable phase shifter 124. The phase shifter 124 shifts the first reference signal by an adjustable amount, converting the first reference signal into a second reference signal. The phase shifter 124 outputs the second reference signal to a drive circuit 123. The drive circuit 123 generates a phase modulating signal in correspondence with the second reference signal, and feeds the phase modulating signal to the phase modulator 7. The phases of the CW and CCW light beams are modulated by the phase modulator 7 in accordance with the phase modulating signal. Thus, the CW and CCW light beams are phase-modulated at a frequency equal to the frequency fm of the first reference signal.

The reference signal generator 122 also outputs the first reference signal to a lock-in amplifier 128. The output signal from the photodiode 3 is fed via a preamplifier 125 to the lock-in amplifier 128. The lock-in amplifier 128 subjects the photodiode output signal to a synchronous detection process by using the first reference signal. The output signal from the lock-in amplifier 128 is converted by a signal processor 126 into a signal directly representing the angular velocity of the fiber-optic gyroscope. The signal processor 126 also generates a feedback signal on the basis of the output signal from the lock-in amplifier 128. The feedback signal is fed to a drive circuit 121. The drive circuit 121 drives the light source 1 in response to the feedback signal. The drive of the light source 1 in response to the feedback signal is designed so that the intensity of the light emitted from the light source 1 can be held essentially constant.

In addition, the reference signal generator 122 also outputs the first reference signal to a fixed phase shifter 129. The phase shifter 129 shifts the first reference signal by a predetermined amount, converting the first reference signal into a third reference signal. The phase shifter 129 outputs the third reference signal to a lock-in amplifier 133. The output signal from the photodiode 3 is fed via the preamplifier 125 to the lock-in amplifier 133. The lock-in amplifier 133 subjects the photodiode output signal to a synchronous detection process by using the third reference signal. The output signal from the lock-in amplifier 133 is fed to a control circuit 134. In addition, the output signal from the lock-in amplifier 128 is fed to the control circuit 134. The control circuit 134 generates a control signal on the basis of the output signals from the lock-in amplifiers 128 and 133, and outputs the control signal to the phase shifter 124. The amount of the phase shift of the first reference signal by the phase shifter 124 is controlled in response to the control signal fed from the control circuit 134.

The phase shifter 129 provides a predetermined phase difference between the first reference signal and the third reference signal fed to the lock-in amplifiers 128 and 133. The predetermined phase shift by the phase shifter 129 and the control of the phase shift of the first reference signal by the phase shifter 124 are designed so that the output signal from the lock-in amplifier 134 which corresponds to a rotation of the fiber-optic gyroscope will remain nullified, and that the lock-in amplifier 128 can execute the sync detection with a given phase of the first reference signal at which the level of the AM noise is minimized.

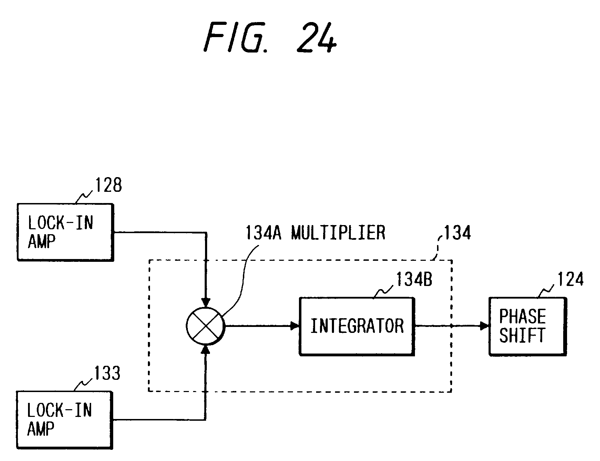

As shown in Fig. 24, the control circuit 134 includes a multiplier 134A and an integrator 134B. The multiplier 134A multiplies the output signals from the lock-in amplifiers 128 and 133. The integrator 134B integrates the output signal from the multiplier 134A into the control signal fed to the phase shifter 124. The control circuit 134 detects a correlation between the output signals from the lock-in amplifiers 128 and 133, and generates the control signal which represents the detected correlation.

The phase control of the reference signal by the phase shifters 124 and 129 may be designed so that the output signals from the lock-in amplifiers 128 and 133 will have opposite polarities but equal absolute values.

The phase shifter 124 may be moved to a position between the preamplifier 125 and the lock-in amplifier 128, a position between the preamplifier 125 and the lock-in amplifier 133, a position between the reference signal generator 122 and the lock-in amplifier 128, or a position between the reference signal generator 122 and the lock-in amplifier 133.

Sixth Embodiment

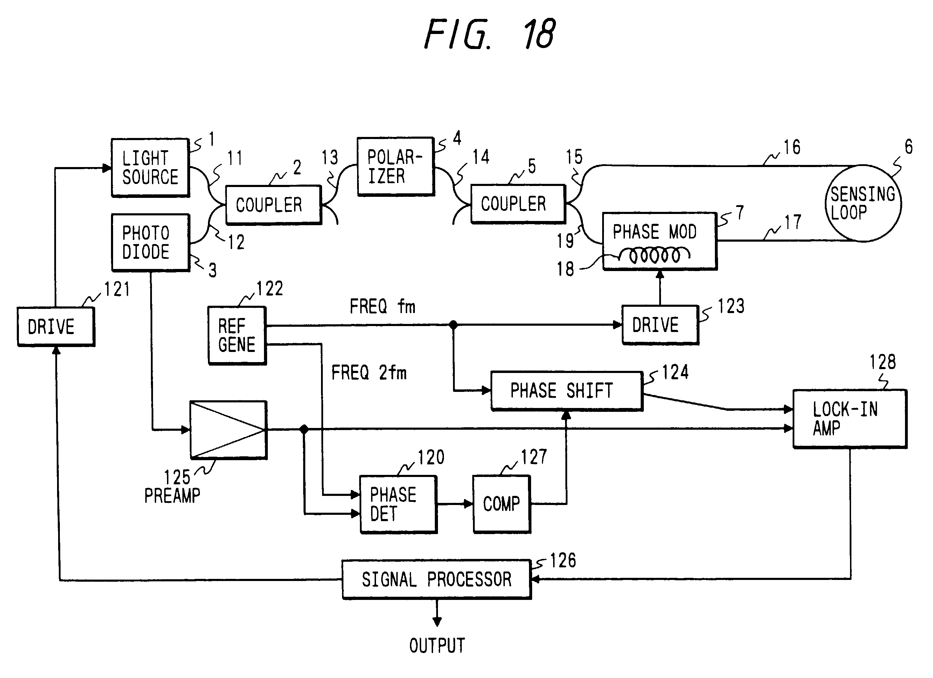

Fig. 18 shows a sixth embodiment of this invention which is similar to the embodiment of Fig. 14 except that the depolarizer 8 (see Fig. 14) is removed.

Seventh Embodiment

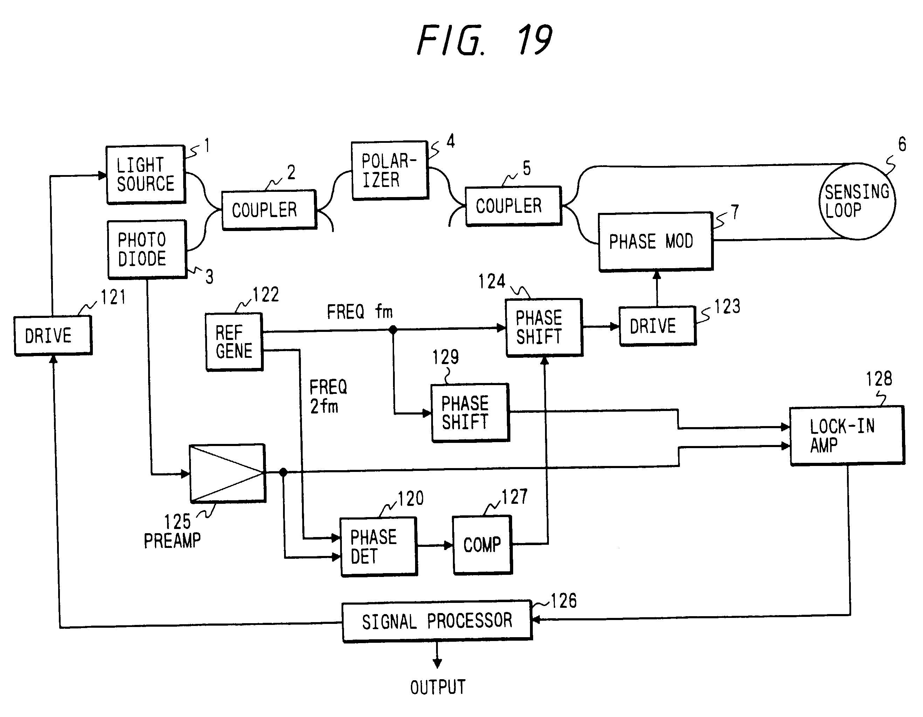

Fig. 19 shows a seventh embodiment of this invention which is similar to the embodiment of Fig. 15 except that the depolarizer 8 (see Fig. 15) is removed.

Eighth Embodiment

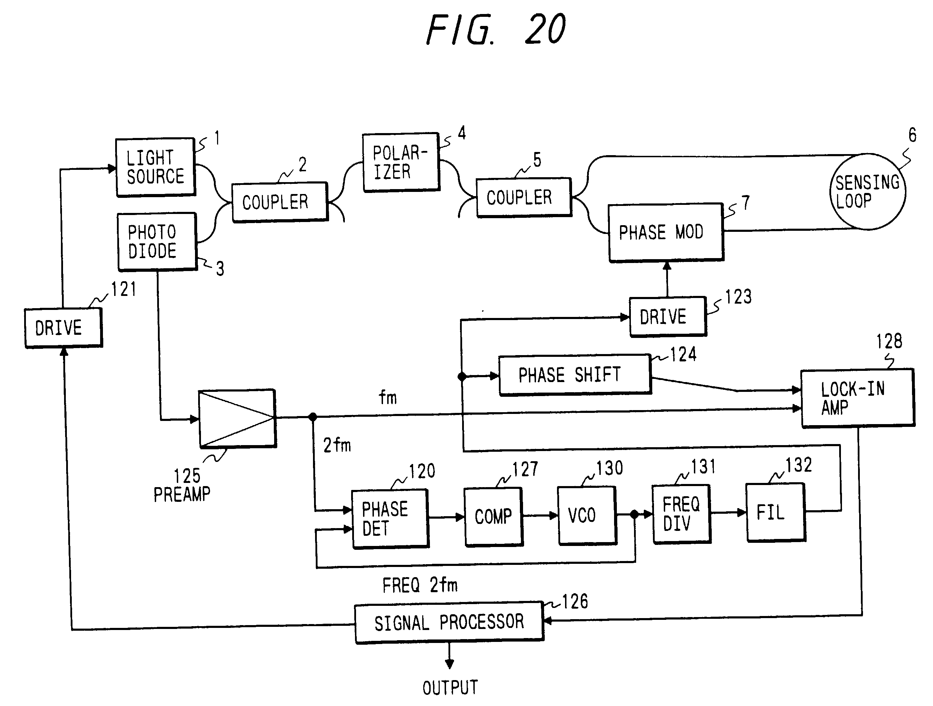

Fig. 20 shows an eighth embodiment of this invention which is similar to the embodiment of Fig. 16 except that the depolarizer 8 (see Fig. 16) is removed.

Ninth Embodiment

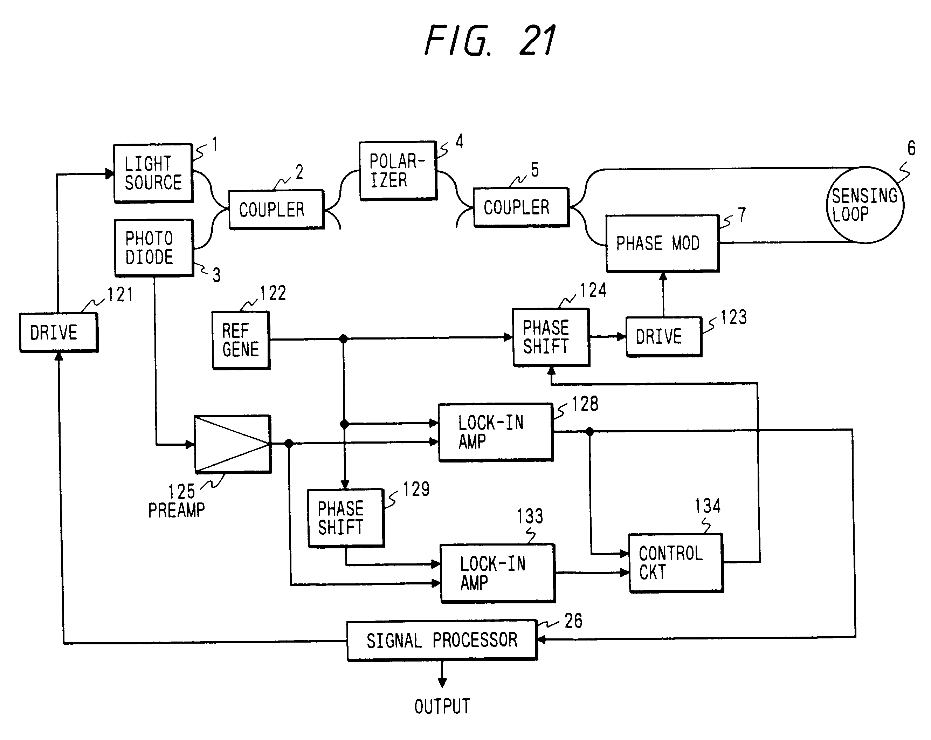

Fig. 21 shows a ninth embodiment of this invention which is similar to the embodiment of Fig. 17 except that the depolarizer 8 (see Fig. 17) is removed.

Tenth Embodiment

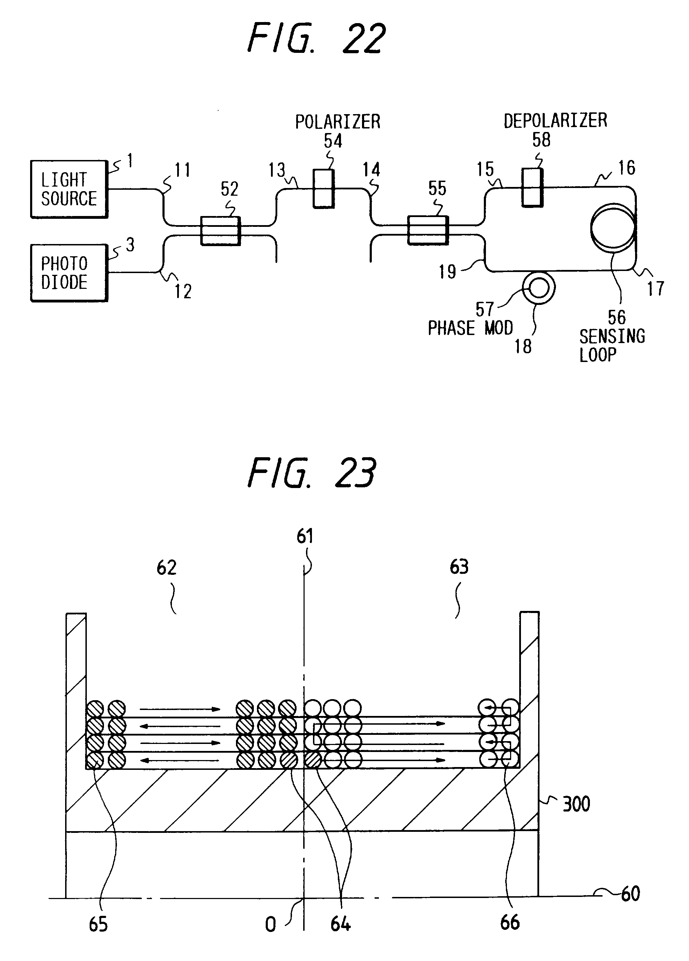

With reference to Fig. 22, a fiber-optic gyroscope includes a light source 1 using a super luminescence diode (an SLD). Light emitted from the fight source 1 is guided to a first optical coupler 52 along an optical path 11 defined by an optical fiber. The first coupler 52 serves as a beam splitter. The first coupler 52 is of the fiber-optic type, using single-mode optical fibers. The light is separated by the first coupler 52 into two light beams having equal intensities. One of the light beams travels from the first coupler 52 to a laminated-type polarizer 54 via an optical path 13 defined by an optical fiber. The polarizer 54 confines the direction of the polarization of the light, and outputs light polarized in one direction. After passing through the polarizer 54, the light travels to a second optical coupler 55 via an optical path 14 defined by an optical fiber. The second coupler 55 serves as a beam splitter. The second coupler 55 is of the fiber-optic type, using single-mode optical fibers.

The light is separated by the beam splitter 55 into two beams, which travel to a depolarizer 58 and a phase modulator 57 via optical paths 15 and 19 defined by optical fibers respectively. The depolarizer 58 serves to convert the polarized light into natural light. After passing through the depolarizer 58, the light beam enters a sensing loop 56 via an optical path 16 and then propagates through the sensing loop 56 in the clockwise (CW) direction. The light traveling through the sensing loop 56 in the CW direction will be referred to as the CW light hereinafter. The optical path 16 and the sensing loop 6 are defined by optical fibers. The CW light exits from the sensing loop 56, and then travels to the phase modulator 57 via an optical path 17 defined by an optical fiber. The CW light propagates through an optical path 18 defined by an optical fiber wound around a piezoelectric element of the phase modulator 57. After exiting from the phase modulator 57, the CW light travels to the second coupler 55 via the optical path 19. The other light beam passes through the optical path 18 within the phase modulator 57, and then travels to the sensing loop 56 via the optical path 17. The light beam enters the sensing loop 56 and propagates through the sensing loop 56 in the counterclockwise (CCW) direction. The light traveling through the sensing loop 56 in the CCW direction will be referred to as the CCW light. The CCW light exits from the sensing loop 56, and then travels to the depolarizer 58 via the optical path 16. The depolarizer 58 converts the polarized light into natural light. After passing through the depolarizer 58, the CCW light travels to the second coupler 55 via the optical path 15.

The CW light and the CCW light are combined by the second coupler 55 into a single return light beam while interfering with each other. After exiting from the second coupler 55, the return light propagates to the first coupler 52 via the optical path 14, the polarizer 54, and the optical path 13. The return light is separated by the first coupler 52 into two light beams, one of which travels from the first coupler 52 to a photodiode 3 via an optical path 12 defined by an optical fiber. The light beam is converted by the photodiode 3 into a corresponding electric signal.

The polarizer 54 is provided for the reason as follows. Generally, two modes of light waves which have orthogonal polarization directions can propagate in an optical fiber. The nonaxisymmetric characteristics of the optical fiber causes an energy coupling between the two orthogonal modes. If the energy coupling conditions change due to a temperature variation or other factors, an error is induced in the output signal from the fiber-optic gyroscope. Specifically, the error causes an drift in the output signal from the fiber-optic gyroscope. A good way of reducing such a drift in the output signal from the fiber-optic gyroscope is to equalize the transfer functions for the CW light and the CCW light. This is realized by the provision of the polarizer 54 in the optical path between the first coupler 52 and the second coupler 55. The polarizer 54 introduces a single polarization component of the forward light into the sensing loop 56, and the introduced light component is separated into the CW light and the CCW light. After traveling through the sensing loop 56, the CW light and the CCW light are combined into the return light. The polarizer 54 passes only a single polarization component of the return light which corresponds to the selected polarization component of the forward light.

Since the characteristics of the laminated-type polarizer 54 have substantially a negligible variation responsive to a temperature variation, it is possible to suppress a drift in the zero-point level of the output signal from the fiber-optic gyroscope which would be caused by a temperature variation of the characteristics of the polarizer 54.

The depolarizer 58 is of the Lyot fiber type, including two polarization-plane conservative optical fibers having different lengths. The length of the longer optical fiber is twice the length of the shorter optical fiber. The two optical fibers are connected in such a manner that the main axes of the optical fibers incline to each other at an angle of 45 degrees. The depolarizer 58 produces a difference in optical path length between the orthogonal polarization modes, decreasing an interference between the orthogonal polarization modes. In other words, the depolarizer 58 depolarizes the CW light beam and the CCW light beam into natural light beams, removing unnecessary interference noise component caused by a variation in the polarization conditions in the sensing loop 56. As a result, it is possible to further reduce the drift in the output signal from the fiber-optic gyroscope.

The sensing loop 56 includes an optical fiber of the single-mode type which is wound symmetrically in a multi-layer configuration. As shown in Fig. 23, a sensing loop arrangement includes a bobbin 300. A region extending around the circumferential surface of the bobbin 300 is divided into halves 62 and 63 by a central plane 61 perpendicular to the main axis 60 of the bobbin 300. A central part 64 of a length of a single-mode optical fiber forming the sensing loop 56 is placed on the bobbin 300 around the central plane 61, and is made into a central portion of an innermost winding layer. Halves 65 and 66 of the optical fiber are wound around the bobbin 300 in the regions 62 and 63 respectively. In odd-numbered winding layers, both the halves 65 and 66 of the optical fiber are wound spirally and extend from the central plane 61 toward the ends of the bobbin 300 respectively. In even-numbered winding layers, both the halves 65 and 66 of the optical fiber are wound spirally and extend from the ends of the bobbin 300 toward the central plane 61. In this way, the halves 65 and 66 of the optical fiber are substantially symmetrical with respect to the central plane 61. Furthermore, the sensing loop 56 is in a point symmetry with respect to the point O of the intersection between the main axis 60 and the central plane 61.

The phase modulator 57 provides an optical phase difference between the CW light and the CCW light. The phase modulator 57 includes a cylindrical piezoelectric element, and the optical fiber wound around the piezoelectric element and defining the optical path 18. While passing through the optical path 18 in the phase modulator 57, the CW light and the CCW light are subjected to phase modulation. This phase modulation is to increase the sensitivity in the detection of a Sagnac phase difference between the CW light and the CCW light which is caused by a rotation of the fiber-optic gyroscope.

The optical fibers defining the optical paths 11, 12, 13, 14, 15, 16, 17, and 19 are of the single-mode type. The optical fiber defining the optical path 18 is preferably of the polarization-plane conservative type for the following reason. As the phase modulator 57 receives a phase modulation signal, the piezoelectric element in the phase modulator 57 expands and contracts. The expansion and contraction of the piezoelectric element causes a stress in the optical fiber defining the optical path 18. The stress in the optical fiber unsettles the polarization conditions and the intensity of the light beams. In the case where the depolarizer 58 adequately depolarizes the CW light and the CCW light, the optical fiber defining the optical path 18 may be of the single-mode type.

## Claims

1.  An optic rotation sensing apparatus comprising:

    a) a light source (1) emitting light;
    b) a sensing loop (6);
    c) means (11, 13-16) for transmitting said light from said light source (1) to said sensing loop (6);
    d) a photodetector (3);
    e) means (21-14, 17-19) for transmitting light from said sensing loop (6) to said photodetector (3); and
    f) means (7) for modulating a phase of light propagating in said sensing loop **(7)**,
    **characterized by**
g) means **(22-27; 120, 122, 124, 126-134)** for controlling and processing an output signal from said photodetector **(3)** at a phase at which a level of a noise component of said output signal from said photodetector **(3)** is minimized.

2. An apparatus according to claim 1,
   **characterized by**
   means **(8)** for depolarizing said light propagating in said sensing loop **(6)**.

3. An apparatus according to claim 1 or 2,
   **characterized by**
   a first coupler **(2)** separating said light emitted from said light source **(1)** into two light beams, a polarizer **(4)**, means **(11)** for transmitting one of said light beams from said first coupler **(2)** to said polarizer **(4)**, a second coupler **(5)** separating light outputted from said polarizer **(4)** into two light beams, said second coupler **(5)** being connected to said sensing loop **(6)**, means **(13, 14, 17-19)** for transmitting return light from said sensing loop **(6)** to said first coupler **(2)** via said second coupler **(5)** and said polarizer **(5)**, said first coupler **(2)** separating said return light into two return light beams, and means **(12)** for transmitting one of said return light beams to said photodetector **(3)**.

4. An apparatus according to claim 2,
   **characterized in that**
   said depolarizing means **(8)** comprises two optical fibers of a polarization-plane conservative type, and that a length of one of said two optical fibers is equal to twice a length of the other of said two optical fibers, said two optical fibers being connected in a manner such that main axes of said two optical fibers incline to each other at an angle of 45 degrees.

5. An apparatus according to claim 4,
   **characterized in that**
   said first and second coupler **(2, 5)** include single-mode optical fibers, said polarizer **(4)** is of a laminated type, and that said modulating means **(7)** includes a cylindrical piezoelectric element and an optical fiber of a polarization-plane conservative type which is wound on said piezoelectric element.

6. An apparatus according to claim 1,
   **characterized in that**
   said controlling and processing means uses phase characteristics of said noise component in a predetermined temperature range.

7. An apparatus according to claim 3,
   **characterized in that**
   said controlling and processing means comprises means **(120)** for detecting a predetermined phase of a harmonic component of said output signal from said photodetector **(3)**, sync detecting means **(128)** for detecting a signal component of said output signal from said photodetector **(3)** by a sync detection at a phase which is obtained on the basis of said predetermined phase and at which the level of said noise component is minimized, a reference signal generator **(122; 130)** generating a signal including a reference signal used by said sync detection, and means **(124, 127)** for varying a phase of said signal generated by said reference signal generator **(122)** on the basis of the phase detected by said phase detecting means **(120)**, and for executing a control so that said phase detecting means **(120)** detects said signal component of said output signal from said photodetector **(3)** at the noise-minimizing phase by said sync detection.

8. An apparatus according to claim 7,
   **characterized in that**
   said controlling and processing means comprises means **(124, 127)** for varying the phase of said reference signal on the basis of the phase detected by said phase detecting means **(120)**, and for controlling said sync detecting means **(128)** so as to detect said signal component of said output signal from said photodetector **(3)** at said noise-minimizing phase by said sync detection.

9. An apparatus according to claim 7,
   **characterized in that**
   said controlling and processing means comprises means **(124, 127)** for varying the phase of said signal generated by said reference signal generator **(122)** on the basis of the phase detected by said phase detecting means **(120)**, and for controlling said phase modulating means **(7)** so that said sync detecting means **(128)** detects said signal component of said output signal from said photodetector **(3)** at said noise-minimizing phase by said sync detection.

10. An apparatus according to claim 7,
    **characterized in that**
    said controlling and processing means comprises means **(127, 130)** for varying a frequency of said reference signal on the basis of the phase detected by said phase detecting means **(120)**, and for controlling said reference signal generator **(130)** so that said sync detecting means **(128)** detects said signal component of said output signal from said photodetector **(3)** at said noise-minimizing phase by said sync detection.

11. An apparatus according to claim 3,
    **characterized in that**
    said controlling and processing means comprises means **(129, 133, 134)** for detecting a predetermined phase at which a magnitude of said output signal from said photodetector **(3)** is equal to a predetermined magnitude, sync detecting means **(128)** for detecting a signal component of said output signal from said photodetector **(3)** by a sync detection at a phase which is obtained on the basis of said predetermined phase and at which the level of said noise component is minimized, a reference signal generator **(122)** generating a signal including a reference signal used by said sync detection, and means **(124)** for varying a phase of said signal generated by said reference signal generator **(122)** on the basis of said phase detected by said phase detecting means **(129, 133, 134)**, and for controlling said phase modulating means **(7)** so that said sync detecting means **(128)** detects said signal component of said output signal from said photodetector **(3)** at said noise-minimizing phase by said sync detection.

12. An optic rotation sensing method comprising the steps of;

    a) feeding light to a sensing loop **(6)**;
    b) modulating a phase of light in said sensing loop **(6)**; and
    c) converting return light outputted from said sensing loop **(6)** into a corresponding electric signal,
      said method being
    **characterized by** the step of:
    d) controlling and processing said electric signal at a phase at which a level of a noise component of said electric signal is minimized.

13. A method according to claim 12,
    **characterized in that**
    said controlling and processing step comprises the steps of detecting a predetermined phase of said electric signal, detecting a signal component of said electric signal by a sync detection at a phase which is obtained on the basis of said predetermined phase and at which a level of said noise component of said electric signal is minimized, generating a signal including a reference signal used by said sync detection, and varying a phase of said reference signal on the basis of said predetermined phase detected by said phase detecting step, and controlling said sync detection so that said signal component of said electric signal is detected at a phase at which the level of said noise component of said electric signal is minimized.

14. A method according to claim 12,
    **characterized in that**
    said controlling and processing step comprises the steps of detecting a predetermined phase of a harmonic component of said electric signal, detecting a signal component of said electric signal by a sync detection at a phase which is obtained on the basis of said predetermined phase and at which a level of said noise component of said electric signal is minimized, generating a signal including a reference signal used by said sync detection, and varying a phase of said signal generated by said generating step on the basis of said predetermined phase detected by said phase detecting step, and controlling said phase modulating step so that said signal component of said electric signal is detected by said sync detection at a phase at which the level of said noise component of said electric signal is minimized.

15. A method according to claim 12,
    **characterized in that**
    said controlling and processing step comprises the steps of detecting a predetermined phase of a harmonic component of said electric signal, detecting a signal component of said electric signal by a sync detection at a phase which is obtained on the basis of said predetermined phase and at which a level of said noise component of said electric signal is minimized, generating a signal including a reference signal used by said sync detection, and varying a frequency of said reference signal on the basis of said predetermined phase detected by said phase detecting step, and controlling said signal generating step so that said signal component of said electric signal is detected by said sync detection at a phase at which the level of said noise component of said electric signal is minimized.

16. A method according to claim 12,
    **characterized in that**
    said controlling and processing step comprises the steps of detecting a predetermined phase at which a magnitude of said electric signal is equal to a predetermined magnitude by a first sync detection, and detecting a phase at which a level of said noise component of said electric signal is minimized, detecting a signal component of said electric signal by a second sync detection at a phase which is obtained on the basis of said predetermined phase and at which a level of said noise component of said electric signal is minimized, generating a signal including a reference signal used by said second sync detection, and varying a phase of said signal generated by said generating step on the basis of said predetermined phase detected by said phase detecting step, and controlling said phase modulating step so that said signal component of said electric signal is detected by said second sync detection at a phase at which the level of said noise component of said electric signal is minimized.

17. A method according to any one of claims 12 to 16,

**characterized by**
the step of depolarizing light in said sensing sensing loop **(6)**.

## Patentansprüche

1. Optische Einrichtung zum Messen einer Drehung, mit:

   a) einer lichtemittierenden Lichtquelle (1);
   b) einer Meßschleife (6);
   c) Mitteln (11, 13 bis 16) zur Übertragung des Lichts aus der Lichtquelle (1) zu der Meßschleife (6);
   d) einem Phasendetektor (3),
   e) Mitteln (21 bis 14, 17 bis 19) zur Lichtübertragung aus der Meßschleife (6) zum Fotodetektor (3); und mit
   f) Mitteln (7) zur Phasenmodulation von Licht, das sich in der Meßschleife (7) ausbreitet,
      **gekennzeichnet durch**
   g) Mittel (22 bis 27, 120, 122, 124, 126 bis 134) zur Steuerung und Verarbeitung eines Ausgangssignals aus dem Fotodetektor (3) in einer Phase, bei der ein Pegel einer Rauschkomponente des Ausgangssignals aus dem Fotodetektor (3) ein Minimum aufweist.

2. Einrichtung nach Anspruch 1,
   **gekennzeichnet durch** Mittel (8) zur Depolarisation des Lichts, das sich in der Meßschleife (6) ausbreitet.

3. Einrichtung nach Anspruch 1 oder 2,
   **gekennzeichnet durch** einen ersten Koppler (2), der das von der Lichtquelle (1) emittierte Licht in zwei Lichtstrahlbündel trennt, einen Polarisator (4), Mittel (11) zur Übertragung eines der Lichtstrahlbündel vom ersten Koppler (2) zum Polarisator (4), einen zweiten Koppler (5), der das von dem Polarisator (4) abgegebene Licht in zwei Lichtstrahlbündel trennt, wobei der zweite Koppler (5) mit der Meßschleife (6) gekoppelt ist, Mittel (13, 14, 17 bis 19) zur Sendung rücklaufenden Lichtes aus der Meßschleife (6) zum ersten Koppler (2) über den zweiten Koppler (5) und den Polarisator (4), wobei der erste Koppler (2) das rücklaufende Licht in zwei rücklaufende Lichtstrahlbündel trennt, und durch Mittel (12) zur Übertragung eines der rücklaufenden Lichtstrahlbündel in den Fotodetektor (3).

4. Einrichtung nach Anspruch 2,
   **dadurch gekennzeichnet,** daß das Depolarisationsmittel (8) zwei Lichtleitfasern des die Polarisationsebene erhaltenden Typs umfaßt, und daß eine Länge der einen der beiden Lichtleitfasern der doppelten Länge der anderen der beiden Lichtleitfasern gleich ist, wobei zwei Lichtleitfasern derart miteinander verbunden sind, daß Hauptachsen der beiden Lichtleitfasern mit einem Winkel von 45 Grad zueinander geneigt sind.

5. Einrichtung nach Anspruch 4,
   **dadurch gekennzeichnet,** daß der erste und zweite Koppler (2, 5) Ein-Moden-Lichtleitfasern enthalten, daß der Polarisator (4) vom laminierten Typ ist und daß das Modulationsmittel (7) ein zylinderisches piezoelektrisches Element und eine Lichtleitfaser des die Polarisationsebene erhaltenden Typs enthält, die um das piezoelektrische Element gewickelt ist.

6. Einrichtung nach Anspruch 1,
   **dadurch gekennzeichnet,** daß die Steuerungs- und Verarbeitungsmittel Phaseneigenschaften der Rauschkomponente in einem vorbestimmten Temperaturbereich nutzen.

7. Einrichtung nach Anspruch 3,
   **dadurch gekennzeichnet,** daß das Steuerungs- und Verarbeitungsmittel ausgestattet ist mit: Mitteln (120) zur Feststellung einer vorbestimmten Phase einer harmonischen Komponente des Ausgangssignals aus dem Fotodetektor (3), Synchronfeststellmitteln (128) zur Feststellung einer Signalkomponente des Ausgangssignals aus dem Fotodetektor (3) durch eine Synchronfeststellung bei einer Phase, die auf der Grundlage der vorbestimmten Phase erzielt wird und bei der der Pegel der Rauschkomponente ein Minimum aufweist, einem Bezugssignalgenerator (122; 130), der ein Signal erzeugt, das ein bei der Synchronfeststellung verwendetes Bezugssignal enthält, und mit Mitteln (124, 127) zur Änderung der Phase des vom Bezugssignalgenerator (122) auf der Grundlage der von den Phasenfeststellmitteln (120) festgestelltwn Phase variiert wird und zur Ausführung einer derartigen Steuerung, daß das Phasenfeststellmittel (120) die Signalkomponente des Ausgangssignals aus dem Fotodetektor (3) bei einer rauschminimierten Phase durch die Synchronfeststellung feststellt.

8. Einrichtung nach Anspruch 7,
   **dadurch gekennzeichnet,** daß das Steuer- und Verarbeitungsmittel über Mittel (124, 127) verfügt, die die Phase des Bezugssignals auf der Grundlage der von dem Phasenfeststellmittel (120) festgestellten Phase variieren und die das Synchronfeststellmittels (128) steuern, damit die Signalkomponente des Ausgangssignals aus dem Fotodetektor (3) in der rauschminimierten Phase durch die Synchronfeststellung feststellt wird.

9. Einrichtung nach Anspruch 7,
   **dadurch gekennzeichnet,** daß das Steuer- und Verarbeitungsmittel über Mittel (124, 127) verfügt, die die Phase des vom Bezugssignalgenerator (122) auf der Grundlage der vom Phasenfeststellmittel (120) festgestellten Phase erzeugten Signals variieren und die das Phasenmodulationsmittel (7) steuern, damit die Signalkomponente des Ausgangssignals aus dem Fotodetektor (3) in der rauschminimierten Phase durch die Synchronfeststellung feststellt wird.

10. Einrichtung nach Anspruch 7,
**dadurch gekennzeichnet,** daß das Steuer- und Verarbeitungsmittel über Mittel (127, 130) verfügt, die eine Frequenz des Bezugssignals auf der Grundlage der von dem Phasenfeststellmittel (120) festgestellten Phase variieren und die den Bezugssignalgenerator (130) steuern, damit die Signalkomponente des Ausgangssignals aus dem Fotodetektor (3) in der rauschminimierten Phase durch die Synchronfeststellung feststellt wird.

11. Einrichtung nach Anspruch 3,
**dadurch gekennzeichnet,** daß das Steuer- und Verarbeitungsmittel ausgestattet ist mit: Mitteln (129, 133, 134) zur Feststellung einer vorbestimmten Phase, bei der eine Stärke des Ausgangssignals aus dem Fotodetektor (3) einer vorbestimmten Stärke gleich ist, Synchronfeststellmitteln (128) zur Feststellung einer Signalkomponente des Ausgangssignal aus dem Fotodetektor 3 durch eine Synchronfeststellung in einer auf der Grundlage der vorbestimmten Phase erzielten Phase, in der der Pegel der Rauschkomponente ein Minimum aufweist, einem Bezugssignalgenerator (122), der ein Signal einschließlich eines bei der Synchronfeststellung benutzten Bezugssignals erzeugt, und mit Mitteln (124) zur Änderung der Phase des vom Bezugssignalgenerator (122) auf der Grundlage des von den Phasenfeststellmitteln (129, 133, 134) erzeugten Signals und zur Steuerung des Phasenmodulationsmittels (7), damit das Synchronfeststellmittel (128) die Signalkomponente des Ausgangssignals aus dem Fotodetektor (3) in der rauschminimierten Phase durch die Synchronfeststellung feststellt.

12. Optisches Verfahren zur Messung einer Drehung, mit den Verfahrensschritten:

a) Lichteinspeisung in eine Meßschleife (6);
b) Modulieren einer Phase des Lichts in der Meßschleife (6) ; und
c) Wandeln zurücklaufenden, von der Meßschleife (6) abgegeben Lichts in ein entsprchendes elektrisches Signal,
**gekennzeichnet durch** den Verfahrensschritt
d) Steuern und Verarbeiten des elektrischen Signals in einer Phase, in der der Pegel der Rauschkomponente des elektrischen Signals minimal ist.

13. Verfahren nach Anspruch 12,
**dadurch gekennzeichnet,** daß der Verfahrensschritt der Steuerung und Verarbeitung folgende Verfahrensschritte umfaßt: Feststellung einer vorbestimmten Phase des elektrischen Signals, Feststellung einer Signalkomponente des elektrischen Signals durch eine Synchronfeststellung in einer auf der Grundlage der vorbestimmten Phase gewonnenen Phase, in der ein Pegel der Rauschkomoponente des elektrischen Signals ein Minimum hat, Erzeugen eines Signals einschließlich eines von der Synchronfeststellung benutzten Bezugssignals und Variieren einer Phase des Bezugssignals auf der Grundlage der bestimmten, in dem Verfahrensschritt der Phasenfeststellung festgestellten Phase, und Steuern der Synchronfeststellung derart, daß die Signalkomponente des elektrischen Signals in einer Phase festgestellt wird, in der der Pegel der Rauschkomponente des elektrischen Signals minimiert ist.

14. Verfahren nach Anspruch 12,
**dadurch gekennzeichnet,** daß der Verfahrensschritt der Steuerung und Verarbeitung folgende Verfahrensschritte umfaßt: Feststellung einer vorbestimmten Phase einer harmonischen Komponente des elektrislchen Signals, Feststellung einer Signalkomponente des elektrischen Signals durch eine Synchronfeststellung in einer auf der Grundlage der vorbestimmten Phase gewonnenen Phase, in der der Pegel der Rauschkomponente des elektrischen Signals minimal ist, Erzeugen eines Signals einschließlich eines bei der Synchronfeststellung benutzten Bezugssignals und Variieren einer Phase des in dem Verfahrensschritt der Erzeugung auf der Grundlage der vorbestimmten, in dem Verfahrensschritt der Phasenfeststellung festgestellten Phase erzeugten Signals, und Steuern des Verfahrensschrittes der Phasenmodulation in der Weise, daß die Signalkomponente des elektrischen Signals durch die Synchronfeststellung in einer Phase festgestellt wird, bei der der Pegel der Rauschkomponete des elektrischen Signal minimal ist.

15. Verfahren nach Anspruch 12,
**dadurch gekennzeichnet,** daß der Verfahrensschritt der Steuerung und Verarbeitung folgende Verfahrensschritte umfaßt: Feststellung einer vorbestimmten Phase einer harmonischen Komponente des elektrislchen Signals, Feststellung einer Signalkomponente des elektrischen Signals durch eine Synchronfeststellung in einer auf der Grundlage der vorbestimmten Phase gewonnenen Phase, in der der Pegel der Rauschkomponente des elektrischen Signals minimal ist, Erzeugen eines Signals einschließlich eines bei der Synchronfeststellung benutzten Bezugssignals und Variieren einer Frequenz des Bezugssignals auf der Grundlage der vorbestimmten, in dem Verfahrensschritt der Phasenfeststellung festgestellten Phase, und Steuern des Verfahrensschrittes der Signalerzeugung in der Weise, daß die Signalkomponente des elektrischen Signals von der Synchronfeststellung in einer Phase festgestellt wird, in der der Pegel der Rauschkomponente des elektrischen Signals minimal ist.

16. Verfahren nach Anspruch 12,
    **dadurch gekennzeichnet,** daß der Verfahrensschritt der Steuerung und Verarbeitung folgende Verfahrensschritte umfaßt: Feststellung einer vorbestimmten Phase, bei der die Stärke des elektrischen Signals einer vorbestimmten Stärke von einer ersten Synchronfeststellung gleich ist, und Feststellung einer Phase, in der ein Pegel der Rauschkomponente des elektrischen Signals minimal ist, Feststellung einer Signalkomponente des elektrischen Signals durch eine zweite Synchronfeststellung in einer Phase, die auf Grundlage der vorbestimmten Phase gewonnen wird, und in der ein Pegel der Rauschkomponente des elektrischen Signals minimal ist, Erzeugen eines Signals einschließlich eines von der zweiten Synchronfeststellung genutzten Bezugssignals und Variieren einer Phase des in dem Verfahrensschritt der Erzeugung auf der Grundlage der vorbestimmten, in dem Verfahrensschritt der Phasenfeststellung festgestellten Phase erzeugten Signals, und Steuern des Verfahrensschrittes der Phasenmodulation in der Weise, daß die Signalkomponente des elektrischen Signals durch die zweite Synchronfeststellung in einer Phase festgestellt wird, in der der Pegel der Rauschkomponete des elektrischen Signal minimal ist.

17. Verfahren nach einem der Ansprüche 12 bis 16,
    **gekennzeichnet durch** den Verfahrensschritt der Lichtdepolarisation in der Meßschleife (6).

## Revendications

1. Un appareil optique pour mesurer une rotation, comprenant:

   a) une source lumineuse (1) émettant de la lumière;

   b) une boucle de mesure (6);

   c) des moyens (11, 13 à 16) pour transmettre ladite lumière de ladite source lumineuse (1) à ladite boucle de mesure (6);

   d) un photodétecteur (3);

   e) des moyens (21 à 14, 17 à 19) pour transmettre de la lumière de ladite boucle de mesure (6) audit photodétecteur (3); et

   f) un moyen (7) pour moduler la phase de la lumière se propageant dans ladite boucle de mesure (7);
   caractérisé par

   g) des moyens (22 à 27; 120, 122, 124, 126 à 134) pour commander et traiter un signal de sortie venant dudit photodétecteur (3) à une phase à laquelle le niveau de la composante de bruit dudit signal de sortie venant du photodétecteur (3) est minimisé.

2. Un appareil selon la revendication 1,
   caractérisé par
   un moyen (8) pour dépolariser ladite lumière se propageant dans ladite boucle de mesure (6).

3. Un appareil selon la revendication 1 ou 2,
   caractérisé par
   un premier coupleur (2) séparant ladite lumière émise par ladite source lumineuse (1) en deux faisceaux lumineux, un polarisateur (4), des moyens (11) pour transmettre l'un desdits faisceaux lumineux dudit premier coupleur (2) audit polarisateur (4), un deuxième coupleur séparant la lumière émise par ledit polarisateur (4) en deux faisceaux lumineux, ledit deuxième coupleur (5) étant relié à ladite boucle de mesure (6), des moyens (13, 14, 17 à 19) pour transmettre la lumière de retour venant de ladite boucle de mesure (6) audit premier coupleur (2) via ledit deuxième coupleur (5) et ledit polarisateur (4), ledit premier coupleur (2) assure la séparation de ladite lumière de retour en deux faisceaux lumineux de retour, et un moyen (12) pour transmettre l'un desdits faisceaux de lumière de retour audit photodétecteur (3).

4. Un appareil selon la revendication 2,
   caractérisé en ce que
   ledit moyen dépolarisant (8) comprend deux fibres optiques d'un type conservant le plan de polarisation, et en ce que la longueur de l'une des deux fibres optiques est égale à deux fois la longueur de l'autre desdites deux fibres optiques, les desdites deux fibres optiques étant reliées de manière telle que les axes principaux desdites deux fibres optiques sont inclinés l'un par rapport à l'autre sous un angle de 45°.

5. Un appareil selon la revendication 4,
   caractérisé en ce que
   lesdits premier et deuxième coupleurs (2, 5) comprennent des fibres optiques monomode, ledit polarisateur (4) est du type laminé, et en ce que ledit moyen de modulation (7) comprend un élément piézoélectrique cylindrique et une fibre optique d'un type conservant le plan de polarisation, enroulée sur ledit élément piézoélectrique.

6.  Un appareil selon la revendication 1, caractérisé en ce que ledit moyen de commande et de traitement utilise des caractéristiques de phase de la dite composante de bruit, dans une plage de température prédéterminée.

7.  Un appareil selon la revendication 3, caractérisé en ce que ledit moyen de commande et de traitement comprend un moyen (120) pour mesurer une phase prédéterminée d'une composante harmonique dudit signal de sortie venant dudit photodétecteur (3), un moyen de détection de synchronisation (128) pour détecter une composante de signal dudit signal de sortie venant dudit photodétecteur (3) par une détection de synchronisation à une phase qui est obtenue sur la base de ladite phase prédéterminée à laquelle le niveau de ladite composante de bruit est minimise, un générateur de signal de référence (122; 130) générant un signal comprenant un signal de référence utilisé par ladite détection de synchronisation, et des moyens (124, 127) destinés à produire une variation de la phase dudit signal généré par ledit générateur de signal de référence (122) sur la base de la phase détectée par ledit moyen de détection de phase (120), et pour exécuter une commande de manière que ledit moyen de détection de phase (120) détecte ladite composante de signal dudit signal de sortie venant dudit photodétecteur (3) à la phase de minimisation du bruit, par ladite détection de synchronisation.

8.  Un appareil selon la revendication 3, caractérisé en ce que ledit moyen de commande et de traitement comprend des moyens (124, 127) destinés à produire une variation de la phase dudit signal de référence sur la base de la phase détectée par ledit moyen de détection de phase (120), et pour commander ledit moyen de détection de synchronisation (128), de manière à détecter ladite composante de signal dudit signal de sortie venant dudit photodétecteur (3), à une phase minimisant le bruit, par ladite détection de synchronisation.

9.  Un appareil selon la revendication 7, caractérisé en ce que ledit moyen de commande et de traitement comprend des moyens (124, 127) pour produire une variation de la phase dudit signal généré par ledit générateur de signal de référence (122) sur la base de la phase détectée par ledit moyen de détection de phase (120), et pour commander ledit moyen de modulation de phase (7), de manière que ledit moyen de détection de synchronisation (128) détecte ladite composante de signal dudit signal de sortie venant dudit photodétecteur (3), à une phase de minimisation du bruit, par ladite détection de synchronisation.

10. Un appareil selon la revendication 7, caractérisé en ce que ledit moyen de commande et de traitement comprend des moyens (127, 130) pour produire une variation de fréquence dudit signal de référence sur la base de la phase détectée par ledit moyen de détection de phase (120), et pour commander ledit générateur de signal de référence (130), de manière que ledit moyen de détection de synchronisation (128) détecte ladite composante de signal dudit signal de sortie venant dudit photodétecteur (3), à une phase de minimisation du bruit, par ladite détection de synchronisation.

11. Un appareil selon la revendication 3, caractérisé en ce que ledit moyen de commande et de traitement comprend des moyens (129, 133, 134) pour détecter une phase prédéterminée à laquelle l'amplitude dudit signal de sortie venant dudit photodétecteur (3) est égale à une amplitude prédéterminée, le moyen de détection de synchronisation (128) destiné à détecter une composante de signal dudit signal de sortie venant dudit photodétecteur (3) par une détection de synchronisation à une phase obtenue sur la base de ladite phase prédéterminée et à laquelle le niveau de ladite composante de bruit est minimisé, un générateur de signal de référence (122) générant un signal comprenant un signal de référence utilisé par ledit détecteur de synchronisation, et un moyen (124) pour produire une variation de la phase dudit signal généré par ledit générateur de signal de référence (122) sur la base de la phase détectée par ledit moyen de détection de phase (129, 133, 134), et pour commander ledit moyen de modulation de phase (7), de manière que ledit moyen de détection de synchronisation (128) détecte ladite composante de signal dudit signal de sortie venant dudit photodétecteur (3), à une phase de minimisation du bruit, par ladite détection de synchronisation.

12. Un procédé de mesure optique de la rotation, comprenant les étapes consistant à:

    a) fournir une lumière à une boucle de mesure (6);

    b) moduler la phase de la lumière dans ladite boucle de mesure (6); et

    c) convertir la lumière de retour émise par ladite boucle de mesure (6) en un signal électrique correspondant,

ledit procédé étant caractérisé par les étapes consistant à :

d) commander et traiter ledit signal électrique à une phase à laquelle le niveau d'une composante de bruit dudit signal électrique est minimisé.

13. Un procédé selon la revendication 12, caractérisé en ce que

ladite étape de commande et de traitement comprend les étapes de détection d'une phase prédéterminée dudit signal électrique, la détection d'une composante de signal dudit signal électrique par une détection de synchronisation à une phase obtenue sur la base de ladite phase prédéterminée et à laquelle un niveau de ladite composante de bruit dudit signal électrique est minimisé, générer un signal comprenant un signal de référence utilisé par ladite détection de synchronisation, et la production d'une variation de la phase dudit signal de référence sur la base de ladite phase prédéterminée détectée par ladite étape de détection de phase, et la commande de ladite détection de synchronisation, de manière que ladite composante de signal dudit signal électrique soit détectée à une phase à laquelle le niveau de ladite composante de bruit dudit signal électrique soit minimisé.

14. Un procédé selon la revendication 12, caractérisé en ce que

ladite étape de commande et de traitement comprend les étapes de détection d'une phase prédéterminée d'une composante harmonique dudit signal électrique, la détection d'une composante de signal venant dudit signal électrique par une détection de synchronisation à une phase qui est obtenue sur la base de ladite phase prédéterminée et à laquelle le niveau de ladite composante de bruit dudit signal électrique est minimisé, la génération d'un signal comprenant un signal de référence utilisé par ladite détection de synchronisation, et produire une variation de la phase dudit signal généré par ladite étape de génération, sur la base de ladite phase prédéterminée détectée par ladite étape de détection de phase, et la commande de ladite étape de modulation de phase, de manière que ladite composante de signal dudit signal électrique soit détectée par ladite détection de synchronisation à une phase à laquelle le niveau de ladite composante de bruit dudit signal électrique est minimisé.

15. Un procédé selon la revendication 12, caractérisé en ce que

ladite étape de commande et de traitement comprend les étapes de détection d'une phase prédéterminée d'une composante harmonique dudit signal électrique, la détection d'une composante de signal dudit signal électrique par une détection de synchronisation à une phase obtenue sur la base de ladite phase prédéterminée et à laquelle le niveau de ladite composante de bruit dudit signal électrique est minimisé, la génération d'un signal comprenant un signal de référence utilisé par ladite détection de synchronisation, et la production d'une variation de la fréquence dudit signal de référence sur la base de ladite phase prédéterminée détectée par ladite étape de détection de phase, et la commande de ladite étape de génération de signal, de manière que ladite composante de signal dudit signal électrique soit détectée par ladite détection de synchronisation à une phase à laquelle à laquelle le niveau de ladite composante de signal dudit signal électrique est minimisé.

16. Un procédé selon la revendication 12, caractérisé en ce que

ladite étape de commande et de traitement comprend les étapes de détection d'une phase prédéterminée à laquelle l'amplitude dudit signal électrique est égale à une amplitude prédéterminée, par une première détection de synchronisation, et la détection de la phase à laquelle le niveau de ladite composante de bruit dudit signal électrique est minimisé, la détection d'une composante de signal dudit signal électrique par une deuxième détection de synchronisation à une phase obtenue sur la base de ladite phase prédéterminée et à laquelle le niveau de ladite composante de bruit dudit signal électrique est minimisé, la génération d'un signal comprenant un signal de référence utilisé par ladite deuxièmes détection de synchronisation, et la production d'une variation de la phase dudit signal généré par ladite étape de génération, sur la base de ladite phase prédéterminée détectée par ladite étape de détection de phase, et la commande de ladite étape de modulation de phase, de manière que ladite composante de signal dudit signal électrique soit détectée par ladite deuxième détection de synchronisation à une phase à laquelle le niveau de ladite composante de bruit dudit signal électrique est minimisé.

17. Un procédé selon l'une quelconque des revendications 12 à 16, caractérisé par

l'étape de dépolarisation de la lumière dans ladite boucle de mesure (6).

# FIG. 1 PRIOR ART

# FIG. 2

EP 0 501 002 B1

# FIG. 3

# FIG. 4

# FIG. 5

# FIG. 6

## FIG. 7

## FIG. 8

EP 0 501 002 B1

# FIG. 9

temp = 25℃

ZERO-POINT OUTPUT (deg/h) vs PHASE SHIFT (deg)

# FIG. 10

temp = 0℃

ZERO-POINT OUTPUT (deg/h) vs PHASE SHIFT (deg)

# FIG. 11

# FIG. 12

POLARIZER
4

DEPOLARIZER
8

LIGHT SOURCE 1

11

13

14

15

16

2

5

PRE AMP 21

PHOTO DIODE 3

12

19

18

6

17

PHASE MOD 7

SENSING LOOP

DRIVE 33

PHASE SHIFT 22

REF GENE 23

DRIVE 25

LOCK-IN AMP 24

SIGNAL PROCESSOR 26A

CONTROL 27

OUTPUT

# FIG. 13

ZERO-POINT OUTPUT (deg/h)

20
10
0
-10
-20

0     5     10     15     20

TIME (hour)

FIG. 14

EP 0 501 002 B1

# FIG. 15

FIG. 16

EP 0 501 002 B1

FIG. 17

# FIG. 18

EP 0 501 002 B1

# FIG. 19

EP 0 501 002 B1

FIG. 20

# FIG. 21

EP 0 501 002 B1

# FIG. 22

# FIG. 23

# FIG. 24